(19) Europäisches Patentamt
European Patent Office
Office européen des brevets

(11) Veröffentlichungsnummer : **0 176 472 B1**

# (12) EUROPÄISCHE PATENTSCHRIFT

(45) Veröffentlichungstag der Patentschrift : **24.01.90**

(51) Int. Cl.$^5$ : **C 09 B 56/16**, D 06 P 1/08, D 21 H 21/30

(21) Anmeldenummer : **85810374.0**

(22) Anmeldetag : **16.08.85**

(54) **Methinazoverbindungen.**

(30) Priorität : **22.08.84 CH 4018/84**

(43) Veröffentlichungstag der Anmeldung : **02.04.86 Patentblatt 86/14**

(45) Bekanntmachung des Hinweises auf die Patenterteilung : **24.01.90 Patentblatt 90/04**

(84) Benannte Vertragsstaaten : **AT BE CH DE FR GB IT LI SE**

(56) Entgegenhaltungen :
**FR-A- 1 257 255**
**GB-A- 984 905**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Möckli, Peter, Dr.**
**Sandgrubenstrasse 13**
**CH-4124 Schönenbuch (CH)**

**EP 0 176 472 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft neue Methinazoverbindungen, Verfahren zu deren Herstellung und deren Verwendung als Farbstoffe zum Färben und Bedrucken von kationisch färbbaren Substraten, vor allem von Papier.

Die erfindungsgemässen neuen Verbindungen entsprechen der Formel

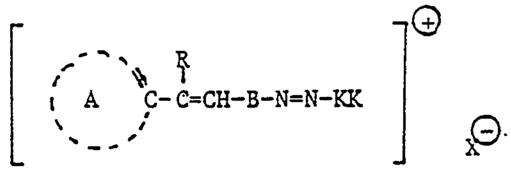

(I)

worin

A die Ergänzung zu einem heterocyclischen 5- oder 6-gliedrigen Ring mit einem quaternierten N-Atom als Ringglied, der weitere Heteroatome enthalten kann und der gegebenenfalls substituiert oder/und mit carbo- oder heterocyclischen Ringen kondensiert sein kann,

R Wasserstoff, Cyano oder $C_2$-$C_3$-Alkylen, das mit einem N-Atom des Ringes A zu einem 5- oder 6-gliedrigen Ring verbunden ist,

B gegebenenfalls substituiertes Phenylen oder Naphthylen,

$X^{\ominus}$ ein Anion und

KK den Rest eines Derivates der Acetessigsäure, Malonsäure oder Cyanessigsäure bedeutet, wobei für den Fall, dass A die Ergänzung zu einem Pyridiniumring bedeutet, KK nicht für den Rest des unsubstituierten oder im Anilinring alkylsubstituierten Acetoacetanilids stehen kann.

Zu erwähnen sind vor allem jene Verbindungen der Formel (I), worin A, R, B und $X^{\ominus}$ wie in Formel (I) definiert sind und KK den Rest eines Derivates der Acetessigsäure, Malonsäure oder Cyanessigsäure bedeutet, mit Ausnahme des Restes des unsubstituierten oder im Anilinring alkyl-substituierten Acetacetanilids.

A bedeutet zusammen, mit der Konfiguration 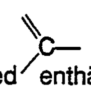 einen heterocyclischen 5- oder 6-gliedrigen Ring, der ein quaterniertes N-Atom als Ringglied enthält. Dieser Ring kann auch noch weitere Heteroatome (N, O, S) enthalten, beispielsweise eines oder zwei, insbesondere eines. An diesen Ring können ein oder mehrere heterocyclische oder vorzugsweise carbocyclische Ringe ankondensiert sein, insbesondere ein Benzo- oder Naphthoring. Die genannten Ringe bzw. Ringsysteme können auch, abgesehen vom Substituenten des N-Atoms, der zur Quaternierung desselben führt, auch noch weitere Substituenten tragen. Beispiele für derartige Substituenten sind Nitro, Halogen, Cyano, $C_1$-$C_4$-Alkyl, $C_1$-$C_4$-Alkoxy, Acetylamino und Dimethylamino. Der Substituent am quaternierten Stickstoffatom kann beispielsweise Phenyl, $C_1$-$C_8$-Alkyl, $C_2$-$C_8$-Alkenyl oder $C_3$-$C_6$-Cycloalkyl bedeuten, wobei die Alkyl-, Alkenyl- oder Cycloalkylkette durch Sauerstoff- oder Stickstoff-atome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyloder Benzylcarbamoyloxy substituiert sein kann.

Beispielsweise bedeutet A die Ergänzung zu einem gegebenenfalls mit carbocyclischen Ringen, vorzugsweise mit einem Benzo- oder Naphthoring, kondensierten Pyrimidin-, Pyridin-, Chinolin-, Thiazol-, Imidazol, Oxazol- oder Pyrrolring, welche Ringe am N-Atom quaterniert sind und gegebenenfalls weiter substituiert sind. Beispiele für Substituenten am quaternierten N-Atom und für zusätzliche Substituenten sind im vorstehenden Absatz angeführt.

In praktisch wichtigen Verbindungen der Formel (I) bedeutet A die Ergänzung zu einem der folgenden Ringe :

(Siehe Formel Seite 3 f.)

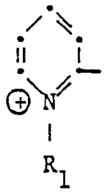, 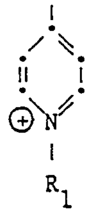, 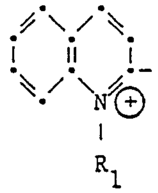, 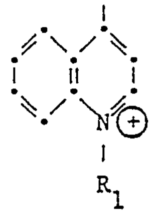, 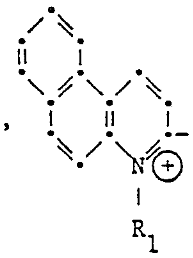

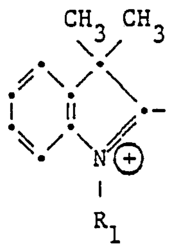, 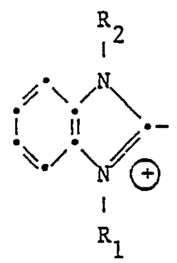, 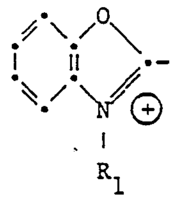, 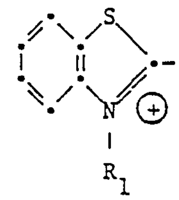

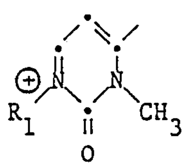, 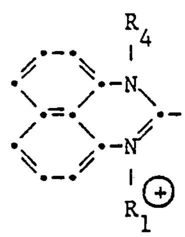, 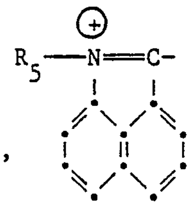 oder 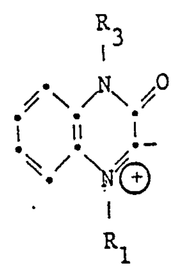,

wobei diese Ringe neben den Substituenten $R_1$-$R_5$ noch durch Nitro, Halogen, Cyano, $C_1$-$C_4$-Alkyl, $C_1$-$C_4$-Alkoxy, Acetylamino oder Dimethylamino substituiert sein können und worin $R_1$, $R_2$, $R_3$ und $R_4$ unabhängig voneinander $C_1$-$C_8$-Alkyl, $C_2$-$C_8$-Alkenyl oder $C_3$-$C_6$ Cycloalkyl bedeuten, wobei die Alkyl-, Alkenyl- oder Cycloalkylkette durch Sauerstoffoder Stickstoffatome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyloder Benzylcarbamoyloxy substituiert sein kann und $R_5$ für Phenyl steht oder die Bedeutung von $R_1$ hat.

Insbesondere bedeutet A die Ergänzung zu einem der folgenden Ringe :

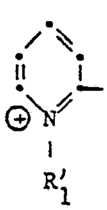, 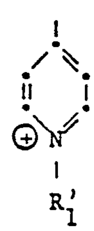, 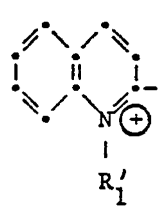, 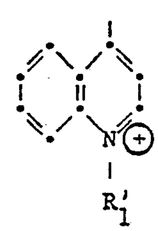, 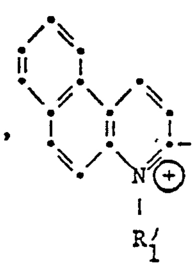

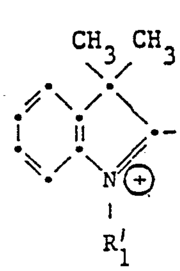, 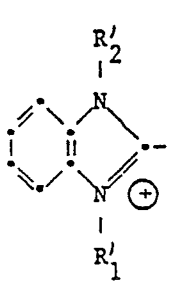 oder 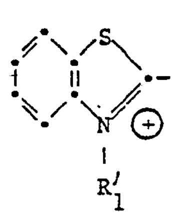,

worin $R'_1$ und $R'_2$ unabhängig voneinander für $C_1$-$C_4$-Alkyl, Benzyl, Cyclohexyl, Hydroxyalkyl oder $C_3$-$C_4$-Alkenyl stehen und die genannten Ringe ansonsten unsubstituiert oder durch Halogen, Cyano, $C_1$-$C_4$-Alkyl, $C_1$-$C_4$-Hydroxyalkyl oder $C_1$-$C_4$-Alkoxy substituiert sind.

Besonders bevorzugt bedeutet A die Ergänzung zu einem gegebenenfalls substituierten und/oder mit carbocyclischen Ringen kondensierten Pyridinring, wobei bevorzugte ankondensierte Ringe und Substituenten vorstehend angegeben sind. Insbesondere ist A die Ergänzung zu einem Pyridinring, dessen N-Atom mit $C_1$-$C_4$-Alkyl, vor allem Methyl, quaterniert ist und das gegebenenfalls zusätzlich mit ein oder zwei $C_1$-$C_4$-Alkylgruppen substituiert ist, wobei die Verknüpfung zur

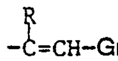-Gruppe

in 2- oder 4-Stellung erfolgt.

Hervorzuheben sind auch jene Verbindungen der Formel (I), worin A die Ergänzung zu einem Pyridinium- oder 33,3-Dimethylindoleniniumring der obigen Formeln bedeutet, worin $R_1$ für methyl steht.

Bedeutet R eine $C_2$-$C_3$-Alkylengruppe, die mit einem N-atom des Ringes A zu einem 5- oder 6-gliedrigen Ring verbunden ist, so handelt es sich beispielsweise um folgende Strukturen :

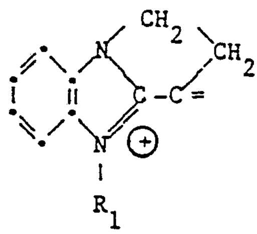 bzw. 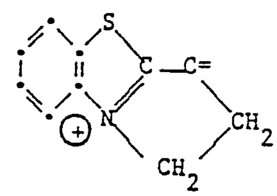

und ähnliche. Bevorzugt bedeutet R jedoch Wasserstoff.

Als Substituenten im Phenylen- bzw. Naphthylenring B kommen beispielsweise in Frage :

$C_1$-$C_4$-Alkyl (z. B. Methyl, Aethyl, n- und iso-Propyl), $C_1$-$C_4$-Alkoxy (z. B. Methoxy, Aethoxy, n-Butoxy, Dimethylaminoäthoxy, Trimethylaminoäthoxy), Halogen (z. B. Fluor, Chlor, Brom), $SO_3H$ und Acylamino (z. B. Acetylamino). In bevorzugten Verbindungen bedeutet B unsubstituiertes Phenylen, insbesondere 1,4-Phenylen.

KK bedeutet den Rest eines Derivates der Acetessigsäure, der Malonsäure oder der Cyanessigsäure, vor allem den Rest einer Acetoacetyl-amid- oder -ester-Kupplungskomponente.

Als Kupplungskomponenten kommen in Frage :

a) Ester und Amide der Acetessigsäure :

Solche Ester und Amide lassen sich leicht durch Umsetzung von OH- und NH-haltigen Verbindungen mit Diketen herstellen, wie es beispielsweise in Houben-Weyl, Methoden der organischen Chemie, Vol. 7, Teil 4, Sauerstoffverbindungen II, beschrieben ist. Derartige Kupplungskomponenten entsprechen zum Beispiel der Formel

$$Z—CH_2—CO—CH_2—CO—R_{44} .$$

Darin bedeutet $R_{44}$ gegebenenfalls substituiertes Alkoxy mit 1-8 Kohlenstoffatomen oder Cycloalkoxy, gegebenenfalls substituiertes Benzyloxy oder Phenoxy, das gegebenenfalls durch $C_1$-$C_4$-Alkyl, $C_1$-$C_4$-Alkoxy, Halogen, Acylamino, Carbonamido, Sulfonamido, Dialkylamino, $C_1$-$C_4$-Alkylcarbonyl, $C_1$-$C_4$-Alkoxycarbonyl, OH oder Phenyl substituiert sein kann.

$R_{44}$ bedeutet weiterhin einen Rest der Formel

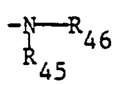,

wobei

$R_{45}$ $C_1$-$C_4$-Alkyl oder vorzugsweise Wasserstoff und

$R_{46}$ Wasserstoff, gegebenenfalls substituiertes (z. B. durch Halogen, OH, Alkoxy, Amino) $C_1$-$C_8$-Alkyl oder Cycloalkyl, oder gegebenenfalls substituiertes Benzyl oder einen Phenylrest der Formel

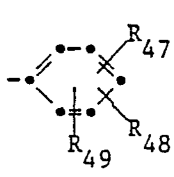

bedeutet.

$R_{47}$ ist dabei Wasserstoff, $C_1$-$C_4$-Alkyl, $C_1$-$C_4$-Alkoxy, Halogen, Cyano, Nitro, OH, Dialkylamino, Phenylamino,

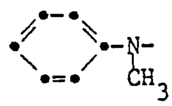

Phenyl, Acylamino, gegebenenfalls substituiertes Carbonamido, gegebenenfalls substituiertes Sulfonamido, $C_1$-$C_4$-Alkylcarbonyl, $C_1$-$C_4$-Alkoxycarbonyl, $C_1$-$C_4$-Alkylsulfonyl, ein Rest der Formel $-(CH_2)_w-K^{\oplus}An^{\ominus}$ gemäss DE-A-3 133 360, wobei $K^{\oplus}$ eine aliphatische oder aromatische Ammoniumgruppe, beispielsweise

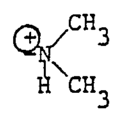 , 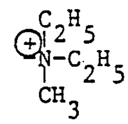

oder

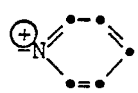

$An^{\ominus}$ ein Anion und w 1 oder 2 bedeutet, ein Rest der Formel

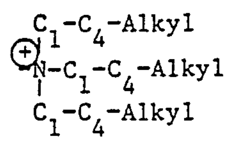

gemäss der DE-A-3 231 398, vorzugsweise

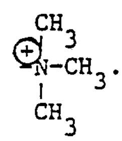 .

$R_{48}$ ist unabhängig von $R_{47}$ Wasserstoff, $C_1$-$C_4$-Alkyl, $C_1$-$C_4$-Alkoxy oder Halogen ;

$R_{49}$ ist unabhängig von $R_{47}$ und $R_{48}$ Wasserstoff, Halogen oder $C_1$-$C_4$-Alkyl.

$R_{46}$ kann weiterhin zusammen mit $R_{45}$ und gegebenenfalls unter Einschluss weiterer Heteroatome einen 5- oder 6-gliedrigen gesättigten oder ungesättigten Ring bilden, beispielsweise der Formel

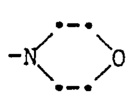 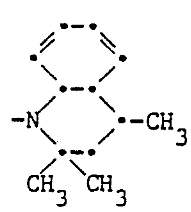 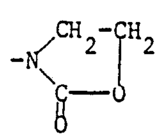 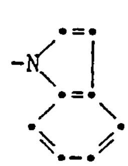 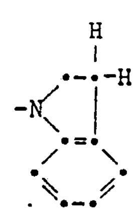 ;

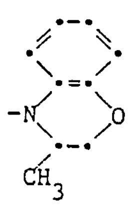 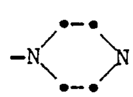 oder 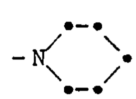 .

$R_{44}$ hat weiterhin auch die Bedeutung eines heterocyclischen Amins, beispielsweise der Formel

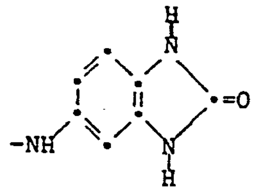 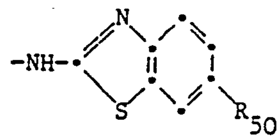 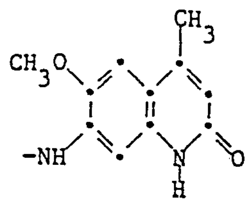

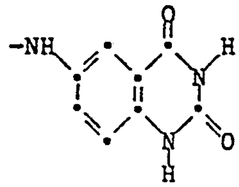 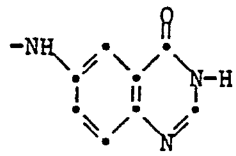 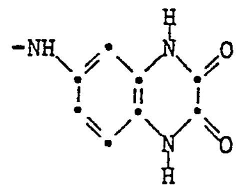

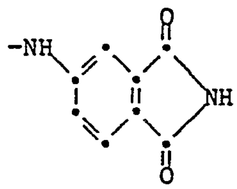 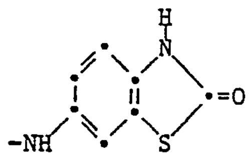 oder 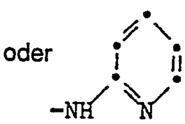 ,

wobei $R_{50}$ Methyl, Aethyl, Methoxy, Aethoxy oder vorzugsweise Wasserstoff oder Acetylamino bedeuten.

$R_{44}$ bedeutet weiterhin einen Rest der Formel

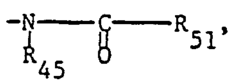 , 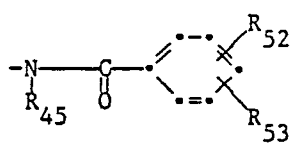 , 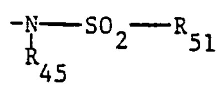 oder

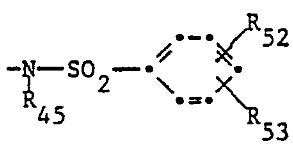 ,

wobei $R_{45}$ die oben angegebene Bedeutung hat und

$R_{51}$ gegebenenfalls substituiertes Alkyl mit 1-8 Kohlenstoffatomen, Cycloalkyl, Amino, Alkylamino, Dialkylamino, Phenylamino, Alkoxy oder Phenoxy und

$R_{52}$ und $R_{53}$ unabhängig voneinander Wasserstoff, $C_1$-$C_4$-Alkyl, $C_1$-$C_4$-Alkoxy, Halogen oder Dialkylamino bedeuten.

Z bedeutet halogen oder vorzugsweise Wasserstoff oder eine aliphatische oder aromatische, gegebenenfalls substituierte Amino- oder Ammoniumgruppe gemäss EP-A-16726 und EP-A-97232, beispielsweise der Formel

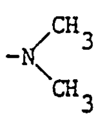 , 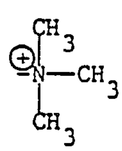 , 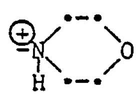 , 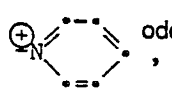 , oder 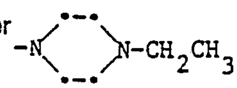 .

b) Ester und Amide der Malonsäure als Kupplungskomponenten entsprechen z. B. der Formel

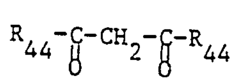

wobei $R_{44}$ die oben angegebene Bedeutung hat, beispielsweise

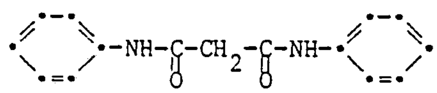 oder 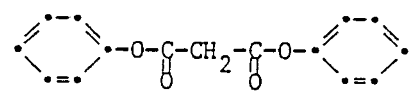

c) Ester und Amide der Cyanessigsäure als Kupplungskomponenten entsprechen z. B. der Formel

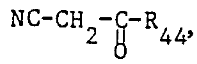

wobei $R_{44}$ die oben angegebene Bedeutung hat, beispielsweise

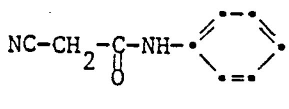

Soweit in obigen Definitionen Alkylgruppen als solche oder in zusammengesetzten Gruppen als « gegebenenfalls substituiert » bezeichnet sind, kommen als Beispiele für solche Substituenten, sofern nichts anderes angegeben ist, folgende in Frage : Hydroxy, Cyano, Halogen (z. B. Cl, Br), $C_1$-$C_4$-Alkoxy, Phenyl (gegebenenfalls 1-3-fach substituiert durch Halogen, Methyl oder Methoxy), Amino, Alkylamino oder Dialkylamino. Sofern ebenfalls nichts anderes angegeben ist, weisen Alkylgruppen als solche oder in zusammengesetzten Gruppen vorzugsweise 1-8, insbesondere 1-4, C-Atome und Cycloalkylgruppen vorzugsweise 5 oder 6 C-Atome auf.

Hervorzuheben sind Verbindungen der Formel (I), worin KK den Rest einer Kupplungskomponente der Formel

$$Z—CH_2—CO—CH_2—CO—R_6,\ R_6—CO—CH_2—CO—R_6 \text{ oder } NC—CH_2—CO—R_6$$

bedeutet, worin Z Wasserstoff, Halogen oder eine gegebenenfalls substituierte aliphatische, cycloaliphatische oder aromatische Amino- oder Ammoniumgruppe, insbesondere der Formel

$-N(CH_3)_2$ , $^{\oplus}N(CH_3)_3$, 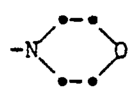 , 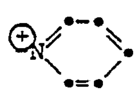 oder 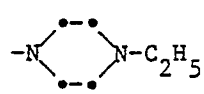 und

$R_6$ gegebenenfalls substituiertes Alkoxy, Cycloalkoxy, Benzyloxy oder Phenoxy, unsubstituiertes oder mono- oder disubstituiertes Amino oder eine 5- oder 6-gliedrige cyclische gesättigte oder ungesättigte Aminogruppe bedeuten, wobei die Reste von Kupplungskomponenten der Formel

$$Z—CH_2—CO—CH_2—CO—R_6 \quad (II)$$

bevorzugt sind.

Insbesondere ist KK der Rest einer Kupplungskomponente der Formel (II), worin

$R_6$ Alkoxy mit 1-8 Kohlenstoffatomen oder Cycloalkoxy, Benzyloxy oder Phenoxy bedeutet, wobei die genannten Gruppen unsubstituiert oder durch $C_1$-$C_4$-Alkyl, $C_1$-$C_4$-Alkoxy, Halogen, Acylamino, Carbonamido, Sulfonamido, Dialkylamino, $C_1$-$C_4$-Alkylcarbonyl, $C_1$-$C_4$-Alkoxycarbonyl, Hydroxy oder Phenyl substituiert sind ; oder

$R_6$ einen Rest der Formel

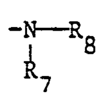,

wobei

$R_7$ $C_1$-$C_4$-Alkyl oder Wasserstoff und

$R_8$ Wasserstoff, gegebenenfalls substituiertes $C_1$-$C_8$-Alkyl, Cycloalkyl, gegebenenfalls substituiertes Benzyl oder einen Phenylrest der Formel

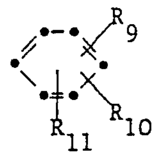

bedeutet, worin

$R_9$ Wasserstoff, $C_1$-$C_4$-Alkyl, $C_1$-$C_4$-Alkoxy, Halogen, Cyano, Nitro, Dialkylamino, Phenylamino,

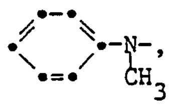

Phenyl, Acylamino, Carbonamido, Sulfonamido, $C_1$-$C_4$-Alkylcarbonyl, $C_1$-$C_4$-Alkoxy-carbonyl, $C_1$-$C_4$-Alkylsulfonyl, einen Rest der Formel $-(CH_2)_w-K^{\oplus}\ An^{\ominus}$, wobei $K^{\oplus}$ für eine aliphatische oder aromatische Ammoniumgrupe, $An^{-}$ für ein Anion und w für 1 oder 2 steht; oder einen Rest der Formel

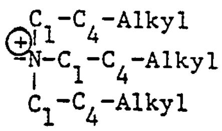

$R_{10}$ Wasserstoff, $C_1$-$C_4$-Alkyl, $C_1$-$C_4$-Alkoxy oder Halogen und

$R_{11}$ Wasserstoff, Halogen oder $C_1$-$C_4$-Alkyl bedeuten; oder wobei

$R_8$ zusammen mit $R_7$, gegebenenfalls unter Einschluss weiterer Heteroatome, einen 5- oder 6-gliedrigen, gesättigten oder ungesättigten Ring bedeuten; oder worin

$R_6$ eine durch einen gegebenenfalls substituierten heterocyclischen Ring substituierte Aminogruppe oder eine Gruppe der formel

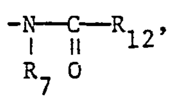, 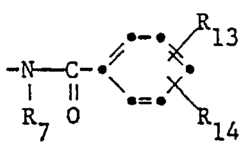, 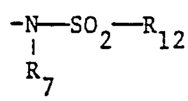 oder 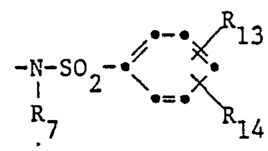

bedeutet, worin

$R_7$ die oben angegebene Bedeutung hat und

$R_{12}$ gegebenenfalls substituiertes $C_1$-$C_8$-Alkyl, Cycloalkyl, Amino, Alkylamino, Dialkylamino, Phenylamino, Alkoxy oder Phenoxy und

$R_{13}$ und $R_{14}$ unabhängig voneinander Wasserstoff, $C_1$-$C_4$-Alkyl, $C_1$-$C_4$-Alkoxy, Halogen oder Dialkylamino bedeuten.

$R_7$ bedeutet vorzugsweise Wasserstoff. Soweit in obigen Definitionen Alkylgruppen als solche oder in zusammengesetzten Gruppen als « gegebenenfalls substituiert » bezeichnet sind, kommen als Beispiele für solche Substituenten, sofern nichts anderes angegeben ist, folgende in Frage: Hydroxy, Cyano, Halogen (z. B. Cl, Br), $C_1$-$C_4$-Alkoxy, Phenyl (gegebenenfalls 1-3-fach substituiert durch Halogen, Methyl oder Methoxy), Amino, Alkylamino oder Dialkylamino. Sofern ebenfalls nichts anderes angegeben ist, weisen Alkylgruppen als solche oder in zusammengesetzten Gruppen vorzugsweise 1-8, insbesondere 1-4, C-Atome und Cycloalkylgruppen vorzugsweise 5 oder 6 C-Atome auf.

Ein substituierter Alkylrest $R_8$ trägt als Substituenten vorzugsweise Halogen, Hydroxy, Alkoxy oder Amino. Ein Benzylrest (z. B. $R_8$) kann die gleichen Substituenten aufweisen wie oben für einen Phenylrest beschrieben, insbesondere 1-3 Substituenten aus der Gruppe $C_1$-$C_4$-Alkyl, $C_1$-$C_4$-Alkoxy, Halogen, Hydroxy, Amino, Alkylamino oder Dialkylamino Als Reste der Formel $-(CH_2)_w-K^{\oplus}\ An^{\ominus}$ kommen insbesondere solche in Betracht, wie sie in der DE-A-3 133 360 beschrieben sind. Beispiele für $K^{\oplus}$ sind

$$-\overset{\oplus}{N}H(CH_3)_2, \quad -\overset{\oplus}{N}H(C_2H_5)_2, \quad -\overset{\oplus}{N}(CH_3)_3, \quad -\overset{\oplus}{N}(C_2H_5)_3, \quad -\overset{\oplus}{N}(C_2H_5)_2(CH_3)$$

oder

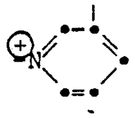

Bevorzugte 5- oder 6-gliedrige Ringe als Substituent $R_8$ sind solche der Formel

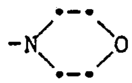 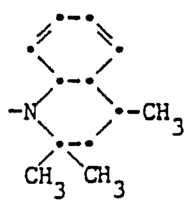 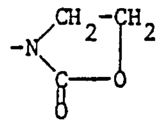 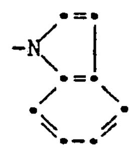 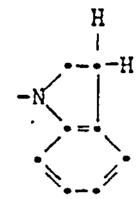 ;

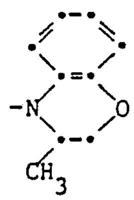 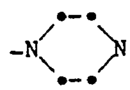 oder 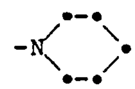 .

Beispiele für durch gegebenenfalls substituierte heterocyclische Reste substituierte Aminogruppen als Substituent $R_6$ sind solche der Formel —$NR_{14}$, worin $R_{14}$ für einen gegebenenfalls substituierten ein- oder zweikernigen heterocyclischen Rest steht, der 5- oder 6-gliedrige, carbound heterocyclische Ringe mit 1 oder 2 N-, O- oder/und S-Atomen als Ringglieder enthält, insbesondere solche der Formel

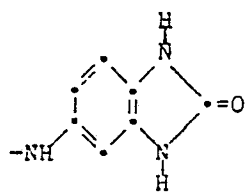 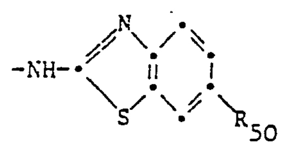 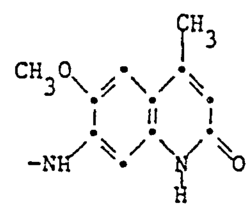

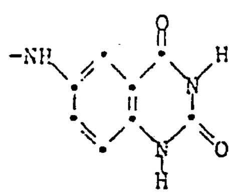 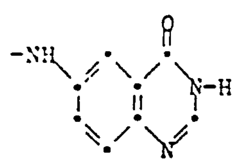 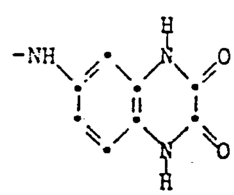

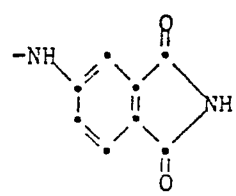 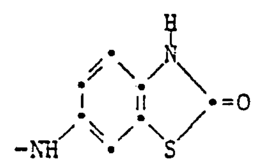 oder 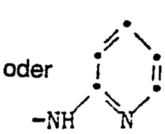

(IIIa-i)

wobei $R_{50}$ Methyl, Aethyl, Methoxy, Aethoxy oder vorzugsweise Wasserstoff oder Acetylamino bedeuten.

In den oben angeführten, von Derivaten der Acetessigsäure abgeleiteten Kupplungskomponenten bedeutet Z vorzugsweise Wasserstoff. Unter Halogen ist in der gesamten Beschreibung F, Cl, Br oder J, vorzugsweise Cl oder Br zu verstehen.

In den Kupplungskomponenten der Formel (II) bedeutet $R_6$ insbesondere

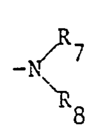

oder —NH—$R_{14}$, wobei $R_7$ und $R_8$ wie oben definiert sind und $R_{14}$ für einen gegebenenfalls substituierten ein- oder zweikernigen heterocyclischen Rest steht, der 5- oder 6-gliedrige, carbo- und heterocyclische Ringe mit 1 oder 2 N-, O- oder/sund S-Atomen als Ringglieder enthält. Beispiele für solche Ringe sind jene der Formeln (IIIa-i).

Von besonderer praktischer Bedeutung sind jene Verbindungen der Formel (I), worin R Wasserstoff, B Phenylen, A die Ergänzung zu einem Ring der Formel

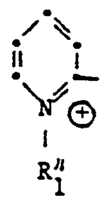 , 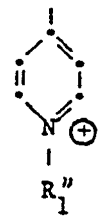 , 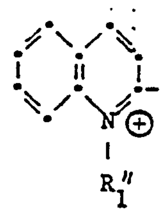 , 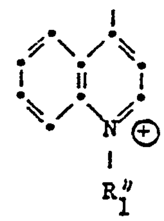 ,

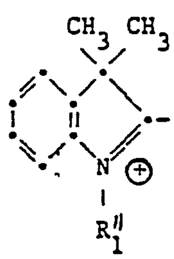 , 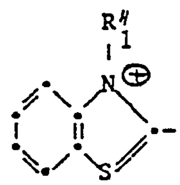 oder 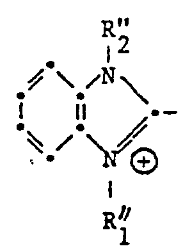 ,

worin $R''_1$ und $R''_2$ jeweils $C_1$-$C_4$-Alkyl, vorzugsweise Methyl, Benzyl oder $C_1$-$C_4$-Hydroxyalkyl, vorzugsweise Hydroxyäthyl und KK einen Rest der Formel

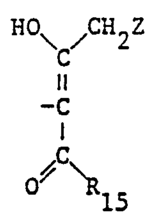

bedeuten, worin Z Wasserstoff, Halogen oder

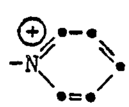 ,

vorzugsweise Wasserstoff, und $R_{15}$—$OR_{16}$, worin $R_{16}$ für $C_1$-$C_4$-Alkyl oder Phenyl steht, oder —NH—$R_{17}$ oder

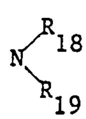

bedeuten, worin $R_{18}$ $C_1$-$C_4$-Alkyl, $C_{19}$ $C_1$-$C_4$-Alkyl oder Phenyl oder $R_{18}$ und $R_{19}$ gemeinsam die Ergänzung zu einem Morpholin-, Piperidin-, Piperazin-, Pyrrolidin- oder

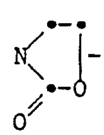

Ring und $R_{17}$ Wasserstoff, $C_1$-$C_4$-Alkyl, Phenyl-($C_1$-$C_4$)-alkyl, Cyclohexyl, Cyclohexyl-($C_1$-$C_4$)-alkyl, Benzoyl, Naphthyl oder eine Gruppe der Formel

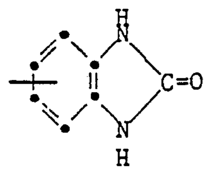 , 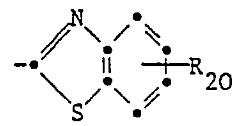 oder 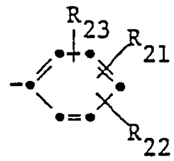

bedeuten, wobei $R_{20}$ Wasserstoff, Halogen, $C_1$-$C_4$-Alkyl oder $C_1$-$C_4$-Alkoxy, $R_{21}$ Wasserstoff, Halogen, $C_1$-$C_4$-Alkyl, $C_1$-$C_4$-Alkoxy, —NHCO-Alkyl($C_1$-$C_4$) oder —$SO_2NH_2$, $R_{22}$ Wasserstoff, Halogen, $C_1$-$C_4$-Alkyl oder $C_1$-$C_4$-Alkoxy und $R_{23}$ Wasserstoff oder Halogen bedeuten, insbesondere jene, worin mindestens einer der Reste $R_{21}$, $R_{22}$ und $R_{23}$ von Wasserstoff und $C_1$-$C_4$-Alkyl verschieden ist.

Insbesondere sind jene Verbindungen der Formel (I) bevorzugt, worin
A die Ergänzung zu einem Ring der Formel

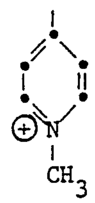 oder 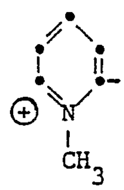

B 1,4-Phenylen, Z Wasserstoff und $R_{15}$ —NH—$R'_{17}$ bedeuten, worin $R'_{17}$ für Benzoyl, Naphthyl,

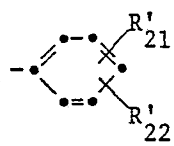 , 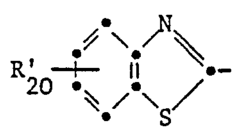 oder 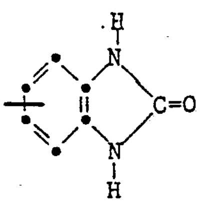

steht, wobei $R'_{21}$ $C_1$-$C_4$-Alkoxy oder NHCO-($C_1$-$C_4$)-Alkyl und $R'_{22}$ Wasserstoff, $C_1$-$C_4$-Alkyl oder $C_1$-$C_4$-Alkoxy und $R'_{20}$ Wasserstoff oder $C_1$-$C_4$-Alkoxy bedeuten.

Es versteht sich von selbst, dass die Reste der Acetessigsäurederivate in verschiedenen tautomeren Formen geschrieben werden können, z. B.

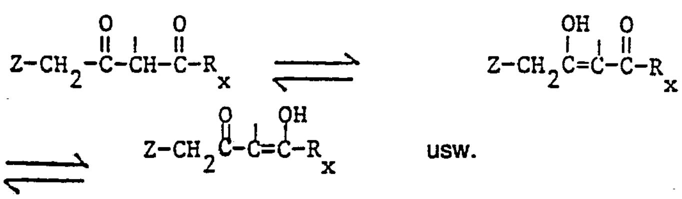

usw.

Wird eine dieser Schreibweisen benützt, dann bedeutet dies selbstverständlich den Einschluss aller möglichen tautomeren Formen.

Als Anionen $X^{\ominus}$ in den Verbindungen der Formel (I) kommen für Farbstoffe übliche farblose organische und anorganische Anionen in Frage ; beispielsweise sind gennant : Chlorid, Bromid, Jodid, Hydroxyl, Hydrogensulfat, Sulfat, Nitrat, Dihydrogenphosphat, Hydrogenphosphat, Phosphat, Carbonat, Methosulfat, Aethosulfat, Acetat, Propionat, Benzolsulfonat, Toluolsulfonat, Formiat, Lactat, Oxalat und Methoxyacetat ; es können aber auch Gemische von verschiedenen Anionen vorliegen.

Die Ladung der erfindungsgemässen Methin-azo-verbindungen der Formel (I) ist definitionsgemäss

kationisch. Da diese Verbindungen auch anionische Gruppen wie $SO_3H$- und COOH-Gruppen enthalten können, ist Bedingung, dass die Summe aller kationischen und basischen Gruppen mindestens um 1 grösser ist als die Summe aller anionischen Gruppen.

Die Herstellung der erfindungsgemässen Methin-azo-verbindungen der Formel (I) erfolgt nach bekannter Art und Weise, beispielsweise derart, dass man eine Methinverbindung der Formel

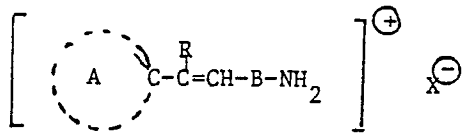

diazotiert und auf eine Kupplungskomponente HKK kuppelt, wobei die allgemeinen Symbole wie in Formel (I) definiert sind.

Die Diazotierung und die Kupplungsreaktion wird in üblicher Weise durchgeführt, zweckmässig in wässrigem, saurem bis schwach alkalischem Medium.

Die erhaltenen, erfindungsgemässen Methinazoverbindungen werden in üblicher Weise vom Reaktionsmedium isoliert oder das Herstellungsvarfahren wird so geleitet, dass sofort eine gebrauchsfertige, konzentrierte Lösung erhalten wird.

Wird die Verbindung isoliert, so erfolgt entweder Trocknung oder aus der isolierten Paste wird direkt die gewünschte Lösung hergestellt.

Die Kupplungskomponenten H-KK sind bekannt oder können nach bekannter Art und Weise erhalten werden. Es wird auf die eingangs genannten Kupplungskomponenten KK verwiesen.

Die Methinverbindungen der Formel

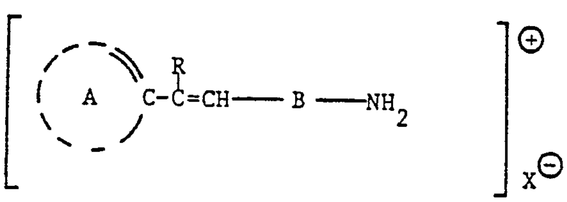

(IV)

sind teilweise bekannt (siehe z. B. : DE-A-2 161 413 ; Zhurnal Obshchei Khimii, Vol. 43, Nr. 8, p. 1789-1794, Aug. 1973 ; US-A 3 185 538, US-A 3 192 195, FR-A 1 391 408, DE-A 1 248 192), oder können nach bekannter Art und Weise hergestellt werden.

Man erhält diese Verbindungen beispielsweise, wenn man Quartärsalze der Formel

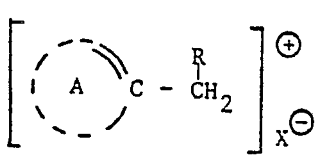

(V)

worin A, R und X die angegebene Bedeutung haben, mit gegebenenfalls substituierten Aminobenzaldehyden oder Aminonaphthaldehyden oder Derivaten davon (z. B. Immoniumsalzen) kondensiert.

Die Kondensation wird bei Temperaturen zwischen 20 und 140 °C, vorzugsweise zwischen 50 bis 110 °C in einem organischen Lösungsmittel durchgeführt. Als solches eignen sich beispielsweise Alkohole, wie Methanol, Aethanol, die Propanole und Butanole ; ferner Benzylalkohol, Essigsäureäthylester,Benzoesäuremethylester, Ameisensäure, Essigsäure, $C_2$-$C_5$-Glykole, Dimethylformamid, Dimethylacetamid, Tetramethylharnstoff, Acetonitril und Benzonitril. Zur Beschleunigung der Kondensationsreaktion können basische Katalysatoren zugesetzt werden, wie beispielsweise Triäthylamin, Pyridin, Piperidin, N-Aethylpyridin, N-Methylmorpholin, Alkalicarbonate, Alkaliacetate und Acetate anorganischer oder organischer Stickstoffbasen wie Ammoniumacetat oder Piperidinacetat.

Die Quartärsalze der Formel V sind bekannt oder können nach bekannter Art und Weise hergestellt werden.

Die freie Aminogruppe der Aminoaldehyde kann gegebenenfalls vor der Kondensation durch eine Acetylgruppe geschützt werden, die anschliessend durch saure Verseifung wieder abgespalten wird.

Die Herstellung der erfindungsgemässen Methinazo-Verbindungen kann aber auch so erfolgen, dass man z. B. zuerst ein Aminobenzaldehyd oder Aminonaphthaldehyd der Formel

$$\overset{\overset{\displaystyle O}{\|}}{HC} - B - NH_2$$

diazotiert und auf die Kupplungskomponente KK-H kuppelt und die erhaltene Azoverbindung der Formel

$$\overset{\overset{\displaystyle O}{\|}}{HC} - B - N = N - KK$$

mit einem Quartärsalz der Formel (V) kondensiert. Die bevorzugten Reaktionsbedingungen für die Kondensation entsprechen jenen, die vorstehend bei der Herstellung der Verbindungen der Formel (IV) beschrieben wurden. Die Diazotierung und Kupplung erfolgt in bekannter Weise.

Verwendung finden die Methinazoverbindungen der Formel (I) vor allem als Farbstoffe zum Färben und Bedrucken von kationisch färbbaren Substraten, wie Wolle, Seide, Leder, sauer modifizierten Polyamid-materialien, Polyacrylnitrilmaterialien, basisch färbbaren, modifizierten Polyestermaterialien, natürlichen und regenerierten Cellulosematerialien wie Baumwolle und Viscose, wobei diese Verbindungen ein gutes Ziehvermögen aufweisen und man brillante Ausfärbungen erhält, die gute Echtheiten aufweisen ; sie sind besonders durch ihre hole Farbstärke gekennzeichnet.

Eine bevorzugte Verwendung der erfindungsgemässen Methinazofarbstoffe der Formel (I) liegt in der Anwendung zum Färben von Papier aller Arten, vor allem von gebleichtem, ungeleimtem und geleimtem ligninfreiem Papier. Ganz besonders geeignet sind die Verbindungen zum Färben von ungeleimtem Papier (Tissues) als Folge ihrer sehr hohen Standard-Affinität zu diesem Substrat.

Die erfindungsgemässen Methinazoverbindungen ziehen sehr gut auf diese Substrate, wobei die Abwasser farblos bleiden, was ein grosser technischer und ökologischer Vorteil, insbesondere im Hinblick auf die heutigen Abwassergesetze ist. Der gute Ausziehgrad ist auch für eine gute Reproduzierbarkeit der Nuance von Vorteil. Der Ausziehgrad wird von der Wasserhärte nicht beeinflusst. Die Papier-Färbungen sind vor allem gekennzeichnet durch ihre Farbstärke, Lichtechtheit und hohe Affinität ; sie zeigen keinee Neigung zum Ausbluten, wenn gefärbtes Papier in nassem Zustant mit feuchtem weissem Papier in Berührung gebracht wird. Diese Eigenschaft ist besonders für sogenannte « Tissues » erwünscht, bei denen vorhersehbar ist, dass das gefärbte Papier in nassem Zustand (z. B. getränkt mit Wasser, Alkohol, Tensid-Lösung) in Berührung mit anderen Flächen, wie z. B. aus Textilien oder Papier kommt, die gegen Verschmutzung geschützt werden müssen.

Die hohe Affinität für Papier und die grosse Ausziehgeschwindigkeit der erfindungsgemässen Methinazofarbstoffe ist für das Kontinue-Färben von Papier von grossem Vorteil, und ermöglicht somit einen sehr breiten Einsatz.

Die Methinazofarbstoffe werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, Natriumphosphat, Natriumchlorid, Natriumacetat in Gegenwart von Entstäubungsmitteln eingesetzt, oder die Methin-azo-farbstoffe werden als Sprühtrocknungspräparationen in den Handel gebracht. Konzentrierte Lösungen können wässriger oder organisch/wässriger Art sein, wobei übliche Zusätze, wie organische Säuren, z. B. Essigsäure, Ameisensäure, Milchsäure, Amide wie Formamid, Dimethylformamid, Harnstoff, Alkohole wie Glykol, Diglykol, Diglykoläther vor allem der Methyl- oder Aethyläther bevorzugt werden.

Eine günstige Zusammensetzung solcher flüssigen Präparate ist beispielsweise die folgende :

100 Teile einer Methinazoverbindung der Formel (I),
1-100 Teile einer organischen Säure wie Ameisen-, Essig-, Milch-, Zitronensäure,
100-800 Teile Wasser, und
0-500 Teile eines Lösungsvermittlers (z. B. Glykole wie Diäthylenglykol, Triäthylenglykol, Hexylenglykol, Glykoläther wie Methylcellosolve, Methylcarbitol, Butylpolyglykol, Harnstoff, Formamid, Dimethylformamid).

Aus der FR-A-1 257 255 sind bereits Methinazofarbstoffe bekannt. Die zu den erfindungsgemässen Farbstoffen nächstliegenden Farbstoffe dieser FR-A-1 257 255 weisen als Rest A die Ergänzung zu einem Pyridiniumring auf und als Kupplungskomponente unsubstituiertes oder durch Methyl substituiertes Acetessigsäureanilid.

Die nachfolgenden Beispiele veranschaulichen die Erfindung sowie die Herstellung der Ausgangsprodukte weiter. Teile und Prozenthangaben beziehen sich auf das Gewicht, sofern nichts anderes angegeben ist.

A) Ausgangsprodukte

Beispiel 1

a) 85,8 g N-Methyl-4-methyl-pyridiniumchlorid und 103,1 g 4-Acetaminobenzaldehyd werden in

720 ml Isopropanol bei Raumtemperatur suspendiert. Man gibt 10 ml Piperidin hinzu und erhitzt 2 Stunden lang auf Rückfluss. Man lässt zunächst unter Rühren auf Raumtemperatur abkühlen und kühlt schliesslich noch im Eisbad. Dann wird die gelblichbraune Kristallmasse abgenutscht und mit total 150 ml kaltem Isopropanol nachgewaschen. Nach der Trocknung erhältt man 155 g eines gelben Kristallpulvers.

b) 57,7 g des nach a) erhaltenen Pulvers werden in einer Lösung aus 200 ml Wasser und 200 ml Salzsäure (32 %) 1 Stunde lang auf Rückfluss erhitzt. Die entstandene gelbe Lösung wird nach dem Erkalten mit Wasser auf ein Gewicht von 493 g eingestellt. Diese Lösung wird telquel zur Diazotierung eingesetzt, sie enthält die Verbindung der Formel

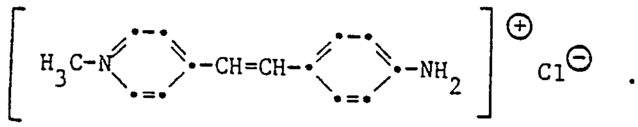

Beispiele 2-13

Ersetzt man im Beispiel 1a) das N-Methyl-4-methyl-pyridinium-chlorid durch die in Tabelle 1, Kol. II aufgeführten Quartärsalze und verfährt im übrigen analog zu Beispiel 1, so erhält man die in Kol. III angegebenen Produkte.

(Siehe Tabelle 1 Seite 15 ff.)

Beispiel 15

24,5 g des Hydrochlorids der Chlor-Fischerbase (1,2,3,3-Tetramethyl-5-chlorindolenins) und 17,3 g 4-Acetaminobenzaldehyd werden in 750 ml n-Butanol 1 Stunde lang auf Rückfluss erhitzt. Die intensiv rote Lösung wird am Rotationsverdampfer auf ein Volumen von ca. 200 ml eingeengt und nach dem Erkalten mit ca. 600 ml Aether gefällt. Das ausgefallene Produkt wird abfiltriert, mit Aether gewaschen und getrocknet. Man erhält 41,3 g eines roten Pulvers. Dieses wird in 400 ml Wasser und 400 ml konz. Salzsäure eine Stunde lang am Rückfluss erhitzt. Nach dem Erkalten wird filtriert, mit Wasser gewaschen und getrocknet.

Man erhält 22,15 g des Ausgangsproduktes der Formel

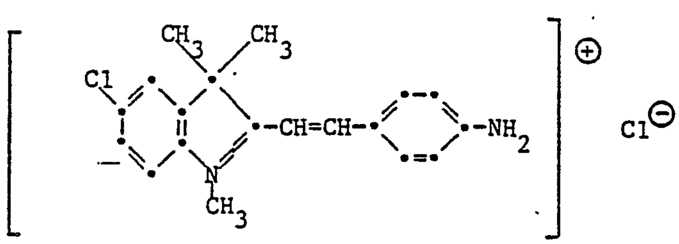

Beispiel 16

Analog zu Beispiel 15 aus der Fischerbase wird die Verbindung der Formel

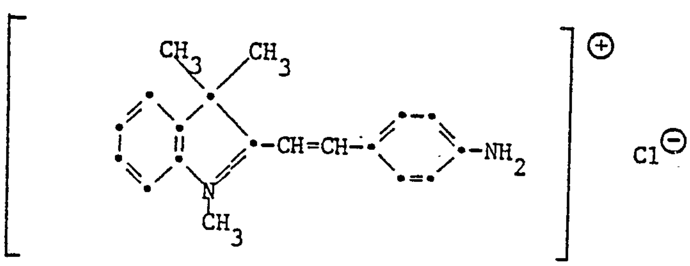

Tabelle I

| I | II | III |
|---|---|---|
| Bsp. | Quartärsalze | Produkte R = 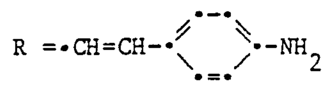 |
| 2 | 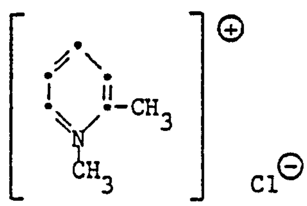 | 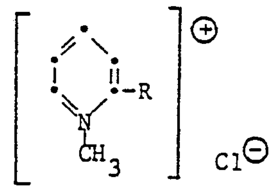 |
| 3 | 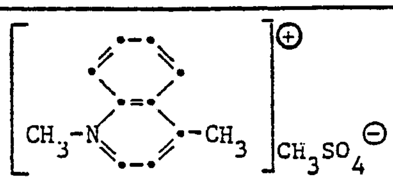 | 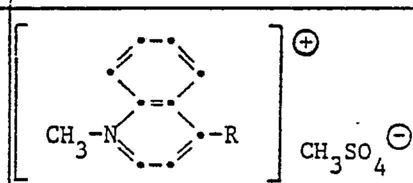 |
| 4 | 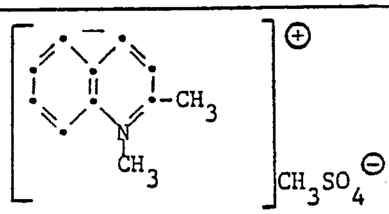 | 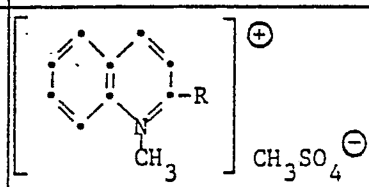 (liegt als Suspension vor) |
| 5 | 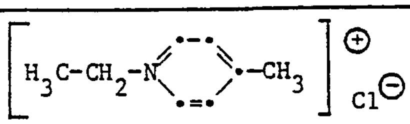 | 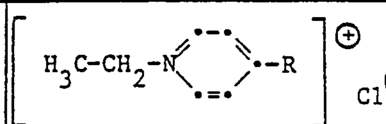 |
| 6 | 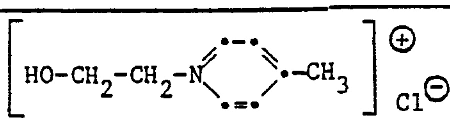 | 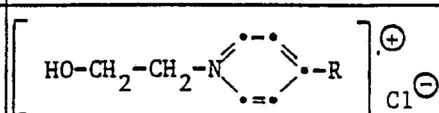 |
| 7 | 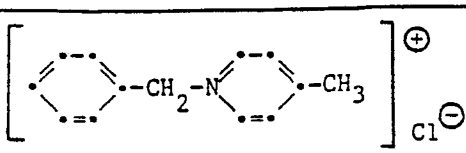 | 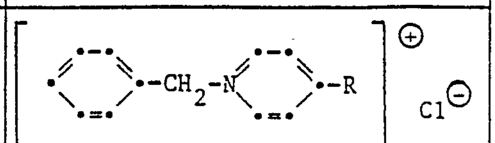 |
| 8 | 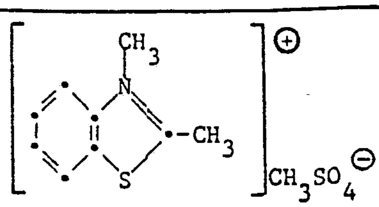 | 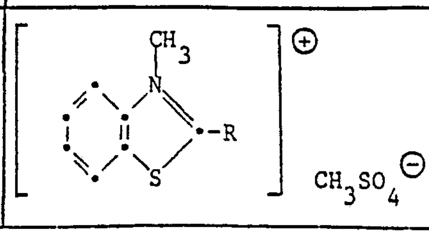 |

Tabelle I (Fortsetzung)

| I | II | III |
|---|---|---|
| Bsp. | Quartärsalze | Produkte R = –CH=CH–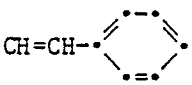–$NH_2$ |
| 9 | 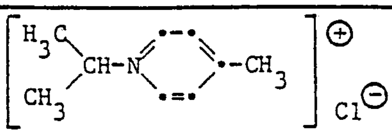 $Cl^{\ominus}$ | 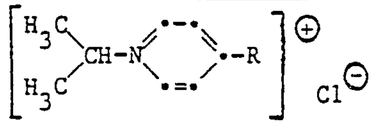 $Cl^{\ominus}$ |
| 10 | 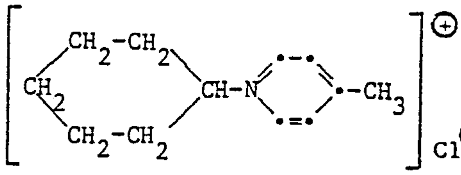 $Cl^{\ominus}$ | 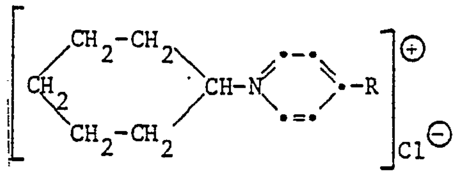 $Cl^{\ominus}$ |
| 11 | 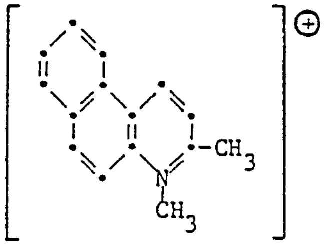 $CH_3SO_4^{\ominus}$ | 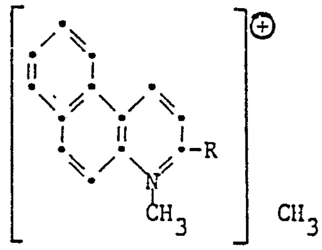 $CH_3SO_4^{\ominus}$ |
| 12 | 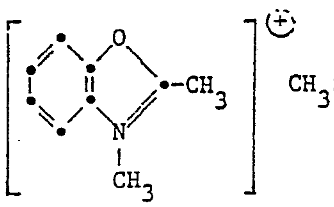 $CH_3SO_4^{\ominus}$ | 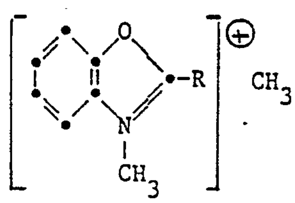 $CH_3SO_4^{\ominus}$ |
| 13 | 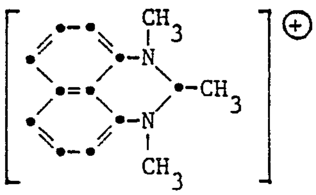 $CH_3SO_4^{\ominus}$ | 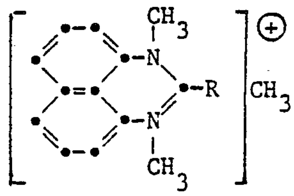 $CH_3SO_4^{\ominus}$ |
| 14 | 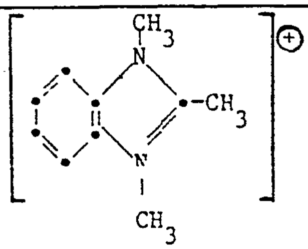 $CH_3SO_4^{\ominus}$ | 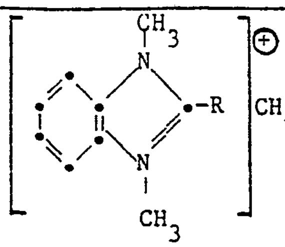 $CH_3SO_4^{\ominus}$ |

hergestellt.

Beispiel 17

47,5 g 4-Picolin werden mit 150 ml Isopropanol und 81,3 g Phenacylchlorid in einem Autoklaven 3 Studen auf 150 °C erhitzt. Nach dem Abkühlen wird die braune Suspension filtriert und gut mit Aether gewaschen. Nach der Trocknung erhält man 113 g eines beigen Kristallpulvers.

49,5 g dieses Pulvers werden in 240 ml Isopropanol mit 34,3 g 4-Acetaminobenzaldehyd und 3,5 ml Piperidin 32 Stunden auf Rückfluss erhitzt. Nach Abkühlen im Eisbad wird filtriert und der Rückstand mit wenig isopropanol nachgewaschen. Der Rückstand wird in 300 ml n-Butanol rekristallisiert ; man erhält 44,6 g eines rotbraunen Pulvers.

19,6 g dieses Pulvers werden in 50 ml heissem Eisessig gelöst und dann mit 50 ml Wasser und 50 ml 32 %-iger Salzsäure versetzt. Nach einer Stunde Rückfluss lässt man kaltrühren, kühlt dann im Eisbad, filtriert und wäscht mit wenig kaltem Wasser nach. Nach Trocknung erhält man 9,3 g der Verbindung der Formel

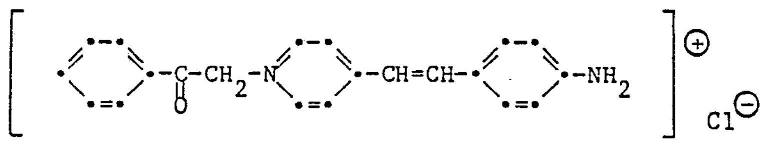

Beispiel 18

5,5 g N-Methyl-4-methyl-pyridiniumchlorid, 5 g 2-Aminobenzaldehyd und 0,65 ml Piperidin werden in 75 ml Isopropanol 5 Stunden lang unter Rückfluss erhitzt. Dann werden während einer weiteren Stunde ca. 70 ml Lösungsmittel abdestilliert. Zum erkalteten, öligen Rückstand tropft man unter Rühren langsam 400 ml Aceton und rührt eine Nacht lang nach. Der Rückstand wird abfiltriert, erneut in 20 ml Methanol gelöst, klarfiltriert und wieder mit 1 1 Aceton gefällt. Der ausgefallene Rückstand wird filtriert und getrocknet. Man erhält 4,5 g der Verbindung der Formel

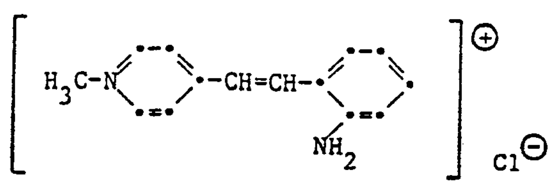

B) Endprodukte

Beispiel 19

12,8 g der unter Beispiel 1b beschriebenen Lösung werden auf 0-5 °C gekühlt und mit 5,0 ml 1 N Natriumnitritlösung diazotiert. Nach 1/2-stündigem Nachrühren bei 0-5 °C wird ein allfälliger Nitritüberschuss mit wenig Sulfaminsäure zerstört. Es resultiert eine gelbe Lösung.

Diese Diazolösung wird zu 1,1 g Acetessigsäure-2-chloranilid, gelöst in 30 ml einer Mischung aus Dimethylformamid und Wasser im Verhältnis 1 : 1, zugegeben. Es entsteht eine schwach orangegelbe Lösung. Nun wird der pH mit krist. Na-acetat auf ca. 4-5 gestellt. Der Farbstoff fällt dabei in kristalliner Form aus. Man rührt 2 Stunden bei Raumtemperatur nach, filtriert ab und wäscht mit 5 % iger NaCl-Lösung nach. Nach der Trocknung man die Verbindung der Formel

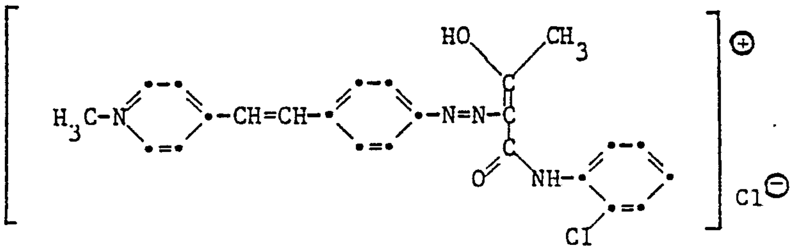

als gelbes Pulver,

das sehr gut wasserlöslich ist und sich hervorragend zum Färben von Papier und Polyacrylnitril in leicht grünstichig gelben Farbtönen eignet.

Beispiele 20-50

Verfährt man wie im Beispiel 19 angegeben, verwendet jedoch die in folgender Tabelle 2, Kol. II angegebenen Kupplungskomponenten, so erhält man Verbindungen der Formel :

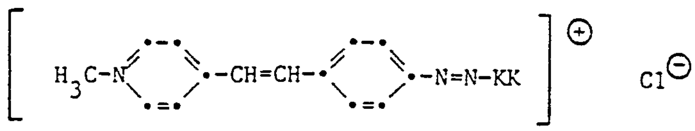

deren Nuance auf Papier und Polyacrylnitril in Kol. III angegeben ist

Tabelle 2

| I | II | III |
|---|---|---|
| Bsp. Nr. | H-KK (R = $CH_3COCH_2CO-$) | Nuance |
| 20 | 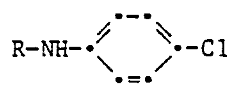 | gelb |
| 21 | 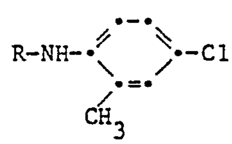 | gelb |
| 22 | 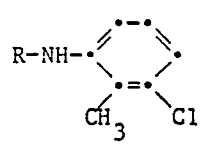 | gelb |
| 23 | 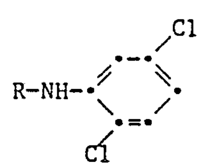 | gelb |
| 24 | 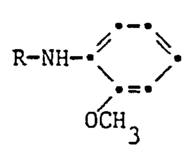 | gelb |
| 25 | 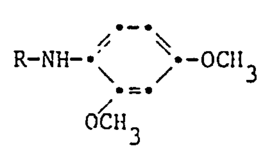 | goldgelb |
| 26 | 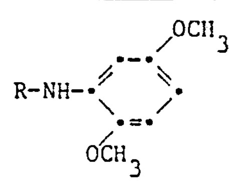 | gelb |

Tabelle 2 (Fortsetzung)

| I | II | III |
|---|---|---|
| Bsp. Nr. | H-KK (R = $CH_3COCH_2CO$-) | Nuance |
| 27 | 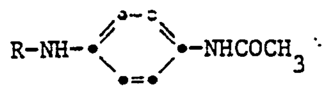 | gelb |
| 28 | 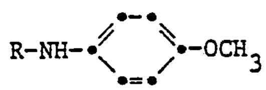 | gelb |
| 29 | 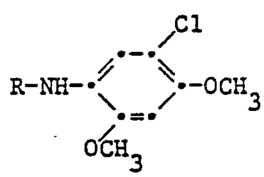 | gelb |
| 30 | 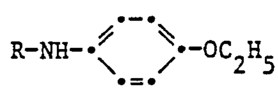 | gelb |
| 31 | 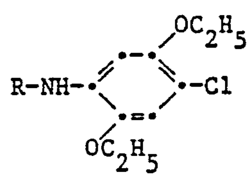 | rotstichig gelb |
| 32 | 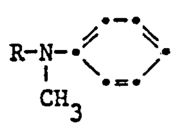 | gelb |
| 33 | 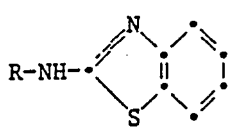 | gelb |
| 34 | 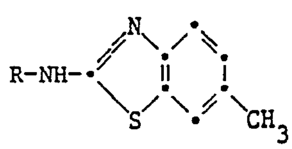 | gelb |

Tabelle 2 (Fortsetzung)

| I | II | III |
|---|---|---|
| Bsp. Nr. | H-KK (R = $CH_3COCH_2CO$-) | Nuance |
| 35 | 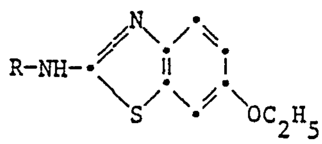 | gelb |
| 36 | R-$NH_2$ | gelb |
| 37 | 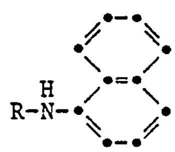 | gelb |
| 38 | 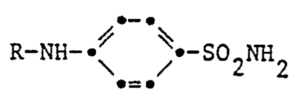 *) | gelb |
| 39 | 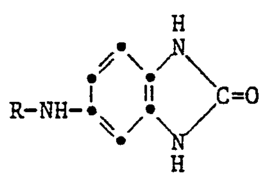 **) | gelb |
| 40 | 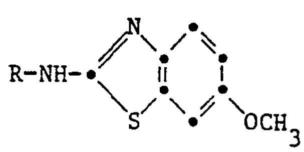 | gelb |
| 41 | 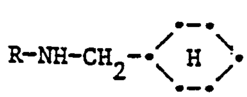 | gelb |

*) Schmelzpungt : 194-198 °C.
**) Schmelzpunkt : 225-230 °C

Tabelle 2 (Fortsetzung)

| I | II | III |
|---|---|---|
| Bsp. Nr. | H-KK (R = $CH_3COCH_2CO-$) | Nuance |
| 42 | 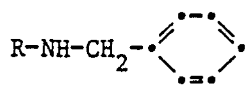 | gelb |
| 43 | 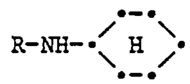 | gelb |
| 44 | 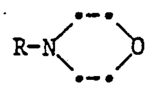 | gelb |
| 45 | 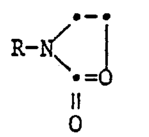 | gelb |
| 46 | 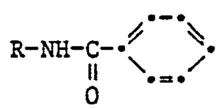 | grünstichig gelb |
| 47 | 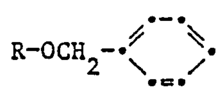 | gelb |
| 48 | 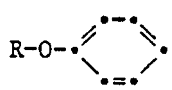 | gelb |
| 49 | 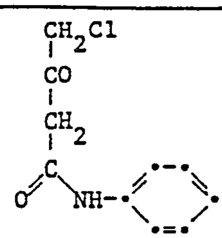 | rotstichig gelb |
| 50 | 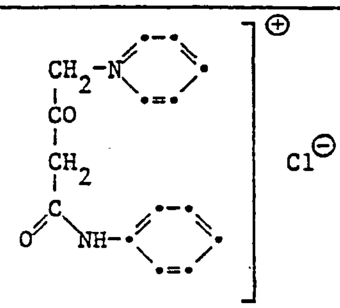 | gelb |

Beispiel 51

Man diazotiert die Verbindung gemäss Beispiel 1b und giesst auf eine Lösung von 1,27 g Malonsäuredianilid (US-A-3 252 968) in 30 ml Dimethylformamid. Man hält die Temperatur bei 15-20 °C und stellt den pH mit wasserfreiem Na-Acetat auf 5. Man rührt 2 Stunden bei Raumtemperatur, fügt dann 30 ml Wasser hinzu, filtriert, und wäscht mit Wasser nach. Nach der Trocknung erhält man 1,75 g des Farbstoffes der Formel

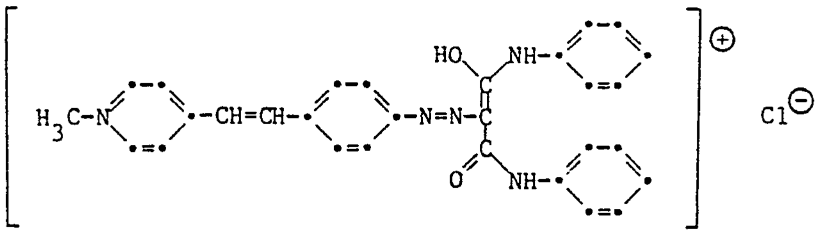

mit dem sich Papier in einer brillanten rotstichig gelben Nuance färben lässt. Schmelzpunkt des Farbstoffes 210-215 °C.

Beispiel 52

Verwendet man im Beispiel 19 statt der Ausgangsverbindung gemäss Beispiel 1 die Ausgangsverbindung gemäss Beispiel 5, so erhält man die Verbindung der Formel

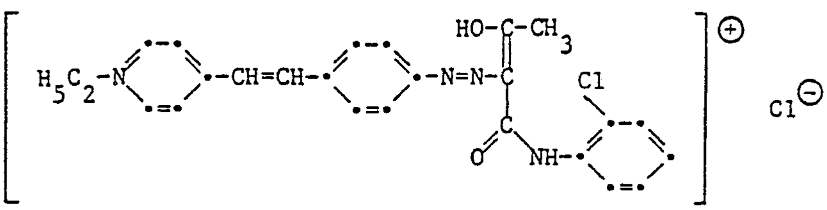

Sie färbt Papier in einer gelben Nuance, die eine Spur röter ist als der entsprechende Farbstoff des Beispiels 19.

Beispiel 53

Ersetzt man im Beispiel 19 die Ausgangsverbindung gemäss Beispiel 1 durch die Ausgangsverbindung gemäss Beispiel 6, so erhält man die Verbindung der Formel

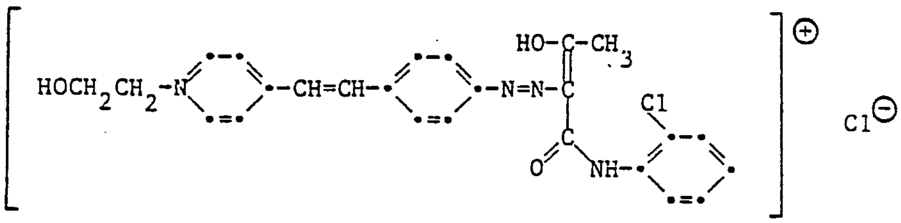

Sie färbt Papier mit gelber Nuance, die wiederum eine Spur röter ist als die des Farbstoffs aus dem Beispiel 52.

Beispiel 54

Ersetzt man iim Beispiel 19 das Acetessigsäure-2-chloranilid durch 0,8 g Acetessigsäure-diäthylamid, gelöst in 10 ml Wasser und 0,5 ml Salzsäure (32 %), so erhält man 3,1 g des Farbstoffes der Formel

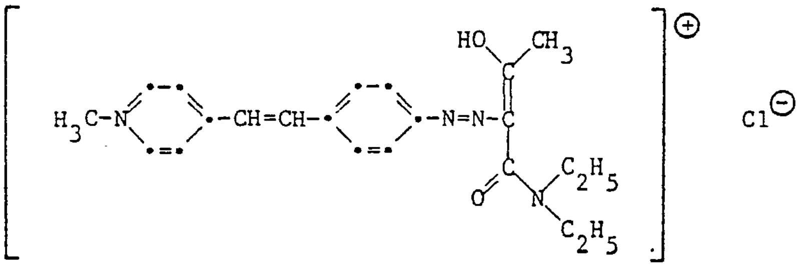

Dieser Farbstoff färbt Polyacrylnitril in einer brillanten grünstichig gelben Nuance.

Beispiele 55-68

Ersetzt man in den Beispielen 20, 19, 22, 24, 33, 27, 28, 25, 26, 37, 30, 39, 40 und 46 das Ausgangsprodukt gemäss Beispiel 1b) jeweils durch das Ausgangsprodukt gemäss Beispiel 2, so erhält man die Farbstoffe der Formel

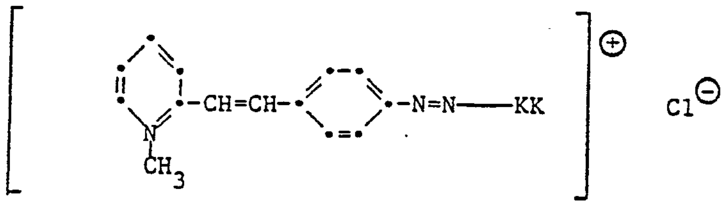

| | KK |
|---|---|
| Beispiel 55 | 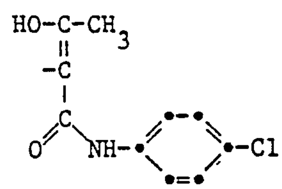 |
| Beispiel 56 | 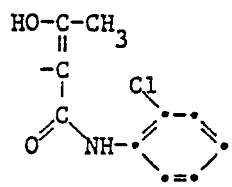 |
| Beispiel 57 | 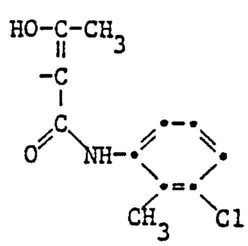 |
| Beispiel 58 | 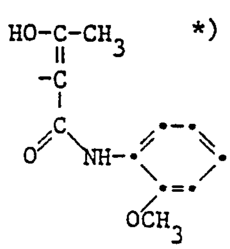 *) |

*) Schmelzpunkt : 244-248 °C

| | KK |
|---|---|
| Beispiel 59 | 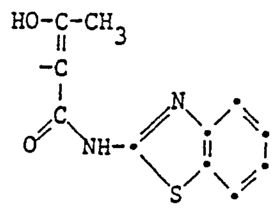 |
| Beispiel 60 | 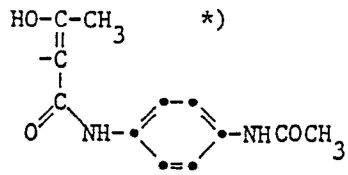 *) |
| Beispiel 61 | 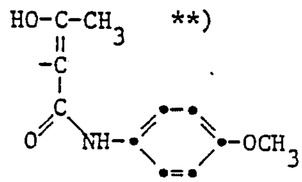 **) |
| Beispiel 62 | 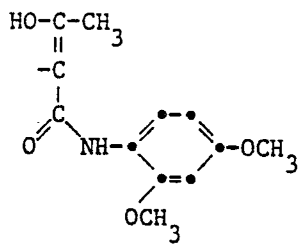 |
| Beispiel 63 | 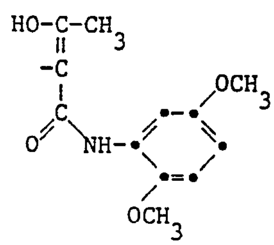 |
| Beispiel 64 | 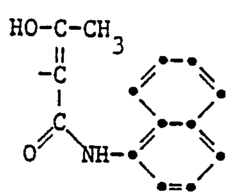 |

*) Schmelzpunkt : 114-118 °C
**) Schmelzpunkt : 180-185 °C

| | KK |
|---|---|
| Beispiel 65 | 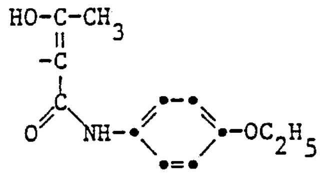 |
| Beispiel 66 | 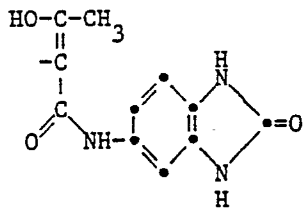 |
| Beispiel 67 | 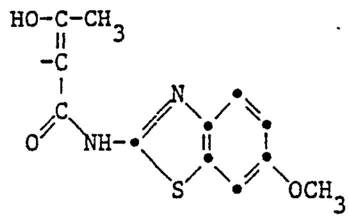 |
| Beispiel 68 | 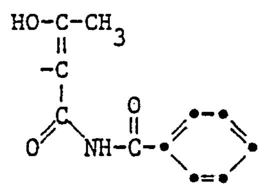 |

Die Nuance dieser Produkte auf Papier ist gegenüber den analogen 4-Picolin-farbstoffen leicht hypsochrom verschoben.

Beispiel 69

19,1 g der in Beispiel 4 erhaltenen salzsauren Suspension wird kurz aufgekocht und geht dabei in Lösung. Man giesst auf 25 g Eis, kühlt ausserdem im Eisbad und gibt 5 ml 1 N Natriumnitritlösung hinzu. Nach einer halben Stunde Nachrührzeit bei 0-5 °C ist fast alles gelöst. Diese Diazolösung wird durch Glaswolle klärfiltriert und zu einer Lösung von 0,9 g Acetessigsäureanilid, gelöst in 30 ml Dimethylformamid und 30 ml Wasser, gegossen. Man stellt den pH mit krist. Natriumacetat auf 4-5 und rührt 2 Stunden bei Raumtemperatur nach. Die sehr feine Suspension wird filtriert und mit 5 %-iger NaCl-Lösung gewaschen. Man erhält 2,4 g des Farbstoffes der Formel

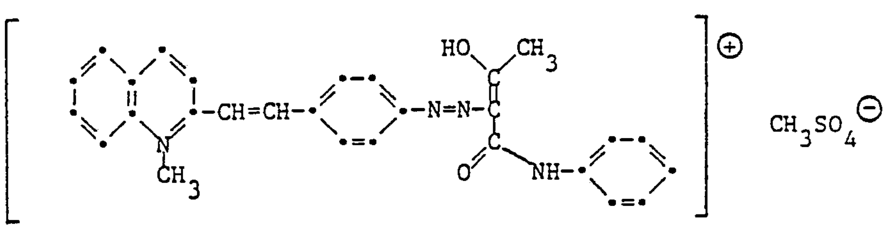

Schmelzpunkt : 210-220 °C.

Dieser färbt Papier in einer ungewöhnlich brillanten gelborangen Nuance. Auf Polyacrylnitril erzeugt er ein reines fluoreszierendes Goldgelb.

Beispiel 70

Ersetzt man im Beispiel 69 das Ausgangsprodukt gemäss Beispiel 4 durch die Suspension des Ausgangsproduktes gemäss Beispiel 3, verfährt sonst wie in Beispiel 69 und fügt vor der Filtration noch 20 g Kochsalz hinzu, so erhält man 1,6 g des Farbstoffes der Formel

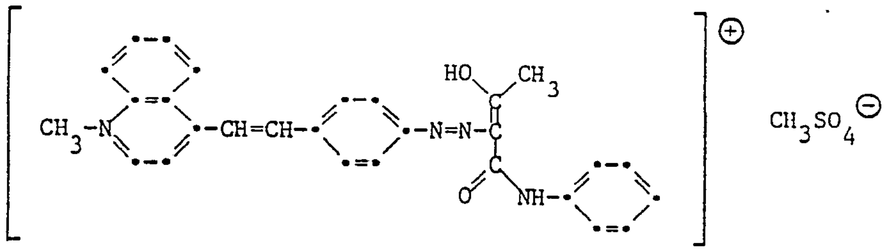

(Schmelzpunkt: 165-170 °C), der sowolhl Papier wie Polyacrylnitril in eidner fluoreszierenden orangen Nuance färbt, etwas bathochromer als der Farbstoff aus Beispiel 69.

Beispiel 71

Ersetzt man im Beispiel 70 das Acetessigsäureanilid durch das 2,4-Dimethoxy-acetessigsäureanilid, so erhält man den Farbstoff der Formel

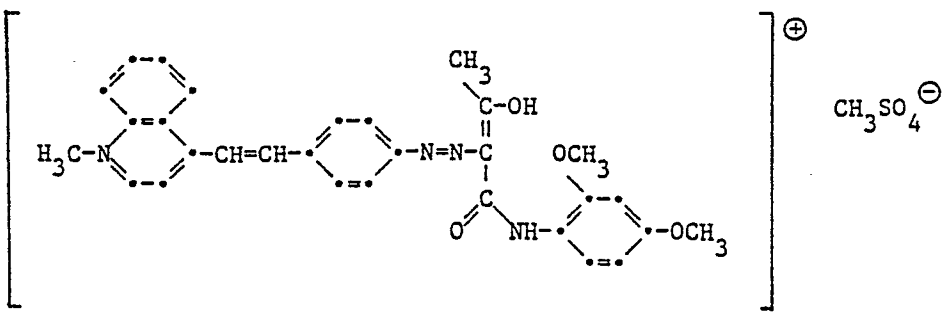

der Papier in einem braunorangen Ton färbt.

Beispiel 72

19,5 g einer salzsauren Suspension gemäss Beispiel 9 werden mit 45 ml Wasser verdünnt und bei 0-5 °C mit 5 ml 1 N Natriumnitritlösung versetzt; dann wird 3 Stunden bei 0-5 °C nachgerührt; es entsteht eine orangegelbe Lösung. Diese wird zu einer Lösung von 0,9 g Acetessigsäureanilid in 15 ml Dimethylformamid und 15 ml Wasser gegossen und der pH mit krist. Natriumacetat auf 4-5 gestellt. Man rührt noch 1 Stunde bei Raumtemperatur, filtriert und wäscht mit 5 %-iger NaCl-Lösung nach. Nach der Trocknung erhält man 2,6 g des Farbstoffes der Formel

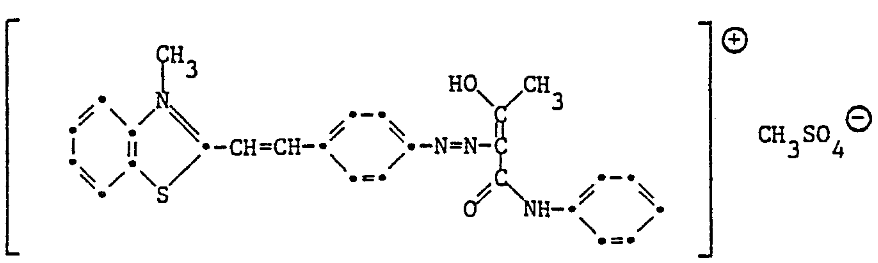

der Papier in einem leuchtenden Orange färbt.

Beispiel 73

Ersetzt man im Beispiel 69 das Ausgangsprodukt gemäss Beispiel 4 durch das Ausgangsprodukt gemäss Beispiel 11, so erhält man den Farbstoff der Formel

(Siehe Formel Seite 27 f.)

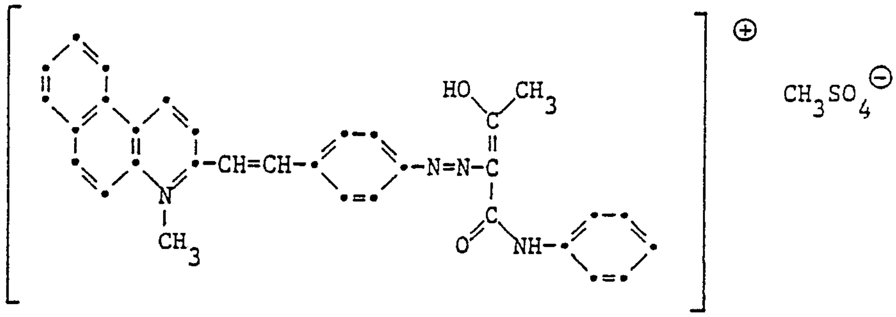

welcher Polyacrylnitril in einer leuchtend organgen Nuance färbt.

Beispiel 74

2,8 g des Ausgangsproduktes gemäss Beispiel 13a werden in 50 ml Wasser und 2,25 ml 30 %-iger Salzsäure nach üblicher Methode mit Natriumnitrit diazotiert. Die Diazolösung wird zu einer Lösung von 1,44 g Acetoacet-o-anisidid, gelöst in 20 ml Dimethylformamid und 20 ml Wasser, gegossen und der pH mit Natriumacetat auf 5,2 gestellt. Nach 3 Stunden Nachrührzeit wird filtriert, mit wenig 5 %-iger Sole gewaschen und getrocknet. Man erhält 4,1 g der Verbindung der Formel

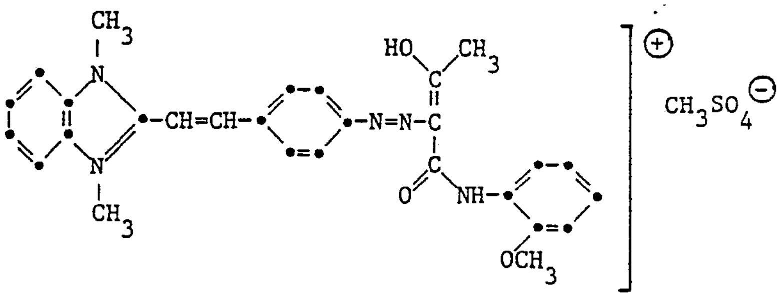

welche Papier in einem leuchtend gelben Farbton mit ausgezeichneten Echtheiten färbt.

Beispiel 75

1,21 g 4-Aminobenzaldehyd (hergestellt nach DE-A-86874) werden in 15 ml Wasser und 3 ml 30 %-iger Salzsäure verrührt. Nach Kühlen auf 0-5 °C werden 10 ml 1 N Natriumnitritlösung zugegeben. Nach 30 Minuten Nachrührzeit wird die Diazolösung klärfiltriert und zu einer Lösung von 2,12 g Acetoacet-o-anisidid in 30 ml Dimethylformamid und 30 ml Wasser gegossen. Nach einigen Minuten fällt ein orangegelber Niederschlag aus. Der pH wird nun mit Natriumacetat auf 4,5 gestellt. Man rührt eine halbe Stunde nach, filtriert und wäscht mit reichlich Wasser. Nach dem Trocknen erhält man 2,6 g der Verbindung der Formel

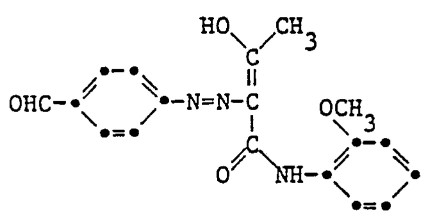

als gelbes Pulver. Es lässt sich gut aus n-Butanol umkristallisieren. 1,7 g dieses Pulvers werden mit 1,15 g des Hydrochlorids der Fischerbase in 25 ml n-Butanol 5 Stunden unter Rückfluss erhitzt. Aus der dunkelorangeroten Lösung fällt beim Erkalten ein Niederschlag aus. Dieser wird abgenutscht und mit Butanol gewaschen. Nach dem Trocknen erhält man 1,9 g der Verbindung der Formel

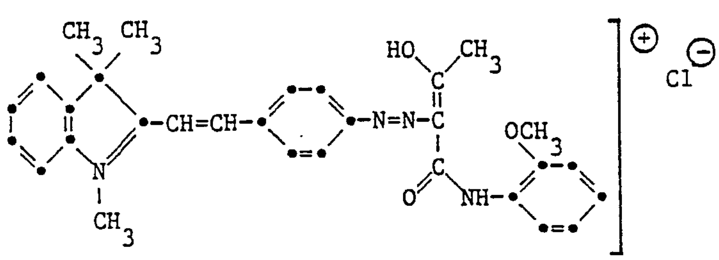

(Schmelzpunkt 225-228 °C), die Papier in einem brillanten Orange mit guten Echtheiten färbt.

Beispiel 76

0,2 g des gemäss Beispiel 24 hergestellten Farbstoffes werden mit 2 g 40 %-iger wässriger Essigsäure angeteigt und durch Zugabe von 4 000 ml heissem Wasser in Lösung gebracht. Man setzt noch 1 g Natriumacetat und 2 g eines mit Dimethylsulfat quaternisierten Anlagerungsproduktes von 15 bis 20 Aequivalenten Aethylenoxid an N-Octadecyldiäthylentriamin zu und geht mit 100 g Polyacrylnitrilgewebe bei 60 °C ein. Innerhalb 30 Minuten erhitzt man das Bad auf 100 °C und färbt dann kochend während 90 Minuten. Hierauf lässt man die Flotte im Verlauf von 30 Minuten bis auf 60 °C abkühlen. Das so gefärbte Material wird dann herausgenommen und anschliessend mit lauwarmem und kaltem Wasser gespült. Man erhält ein grünstichig gelb gefärbtes Polyacrylnitrilgewebe. Die Färbung weist eine gute Lichtechtheit auf.

Beispiel 77

Ein Polyacrylnitril-Mischpolymerisat bestehend aus 93 % Acrylnitril und 7 % Vinylacetat wird in Dimethylacetamid zu 15 % gelöst. Die Spinnflüssigkeit wird in ein Spinnbad extrudiert, welches aus 40 % Dimethylacetamid und 60 % Wasser besteht. Anschliessend wird das entstandene Spinnkabel nach bekannten Methoden verstreckt und durch Spülen mit heissem und kaltem Wasser vom Dimethylacetamid befreit.

Dieses nasse Spinnkabel wird durch Tauchen in einem Bad von 42 °C folgender Zusammensetzung gefärbt :

4,5 g/l Farbstoff gemäss Beispiel 33
pH 4,5 mit Essigsäure.

Die Kontaktzeit Faserkabel-Färbeflotte beträgt 3-5 Sekunden. Anschliessend wird die überschüssige Farbflotte abgequetscht und das Spinnkabel dem Trockner zugeführt. Es resultiert ein gelb gefärbtes Faserkabel mit guten Echtheiten.

Beispiel 78

Man bereitet eine Druckpaste, bestehend aus :

10 g des gemäss Beispiel 26 erhaltenen Farbstoffes,
30 g Thiodiglykol,
20 ml Essigsäure (80 %-ig),
350 ml kochendem Wasser,
500 g Johannisbrotkernmehlverdickung,
30 g Weinsäure,
15 g Di-(β-cyanäthyl)-formamid und
30 g eines Naphthalinsulfonsäureformaldehyd-Kondensationsproduktes.

Ein mit dieser Druckpaste bedrucktes Polyacrylnitril-Gewebe wird danach auf einem HT-Hängeschleifendämpfer 20 bis 30 Minuten bei 101 bis 103 °C fixiert und wie üblich fertiggestellt. Man erhält einen gelben Druck.

Beispiel 79

Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 60 unter starker Turbulenz dem Dünnstoff kontinuierlich zudosiert (0,2 %-ige Färbung, Flottenverhältnis 1 : 400, Wasserhärte 10° dH, pH 6, Temperatur 20 °C).

Es entsteht auf der Papierbahn eine grünstichig gelbe Nuance. Das Abwasser ist völlig farblos.

Beispiel 80

Man vermischt 50 g chemisch gebleichtes Buche-Sulfit mit 50 g gebleichtem Fichte-Sulfit (Mahlgrad 22° SR) und 0,2 g des Farbstoffes gemäss Beispiel 39 in Wasser (pH 6, Wasserhärte 10° dH, Temperatur 20 °C, Flottenverhältnis 1 : 40). Nach 15-minütigem Rühren werden Papierblätter auf einem Frank-Blattbildner hergestellt.

Das Papier ist in einer sehr intensiven grünstichig gelben Nuance gefärbt. Das Abwasser ist völlig farblos. Der Ausziehgrad erreicht praktisch 100 %. Die Nassechtheiten sind ausgezeichnet.

Setzt man in den Beispielen 76-80 die übrigen Verbindungen gemäss den Beispielen 19-75 als Farbstoffe ein, so erhält man ebenfalls gute und echte Färbungen auf den jeweiligen Substraten.

**Patentansprüche** (für die Vertragsstaaten : DE, GB, FR, CH, LI, IT, BE, SE)

1. Methinazoverbindungen der Formel

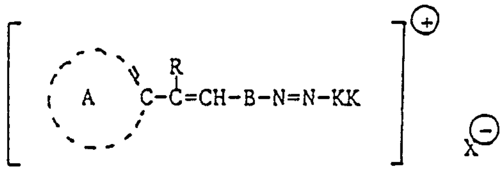

worin

A die Ergänzung zu einem heterocyclischen 5- oder 6-gliedrigen Ring mit einem quaternierten N-Atom als Ringglied, der weitere Heteroatome enthalten kann und der gegebenenfalls substituiert oder/und mit carbo- oder heterocyclischen Ringen kondensiert sein kann,

R Wasserstoff, Cyano oder $C_2$-$C_3$-Alkylen, das mit einem N-Atom des Ringes A zu einem 5- oder 6-gliedrigen Ring verbunden ist,

B gegebenenfalls substituiertes Phenylen oder Naphthylen,

$X^{\ominus}$ ein Anion und

KK den Rest eines Derivates der Acetessigsäure, Malonsäure oder Cyanessigsäure bedeutet, wobei für den Fall, dass A die Ergänzung zu einem Pyridiniumring bedeutet, KK nicht für den Rest des unsubstituierten oder im Anilinring alkylsubstituierten Acetoacetanilids stehen kann.

2. Methinazoverbindungen nach Anspruch 1, worin A, R, B und $X^{\ominus}$ wie in Anspruch 1 definiert sind und KK den Rest eines Derviates der Acetessigsäure, Malonsäure oder Cyanessigsäure bedeutet, mit Ausnahme des Restes des unsubstituierten oder im Anilinring alkylsubstituierten Acetoacetanilids.

3. Methinazoverbindungen nach Anspruch 1 oder 2, worin R Wasserstoff bedeutet.

4. Methinazoverbindungen nach einem der Ansprüche 1-3, worin B Phenylen, vorzugsweise 1,4-Phenylen, bedeutet.

5. Methinazoverbindungen nach einem der Ansprüche 1-4, worin A die Ergänzung zu einem quaternierten, gegebenenfalls substituierten oder/und mit carbocyclischen Ringen kondensierten Pyridin-, Pyrrol-, Pyrimidin-, Chinolin-, Thiazol-, Imidazol- oder Oxazolring bedeutet.

6. Methinazoverbindungen nach Anspruch 5, worin A die Ergänzung zu einem quaternierten, gegebenenfalls substituierten oder/und mit carbocyclischen Ringen kondensierten Pyridinring bedeutet.

7. Methinazoverbindungen nach Anspruch 5, worin A die Ergänzung zu einem der folgenden Ringe

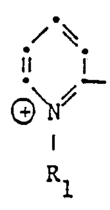 , 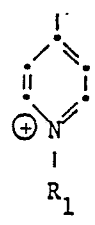 , 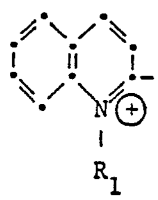 , 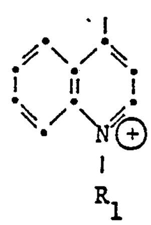 , 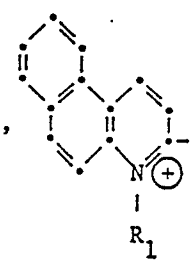

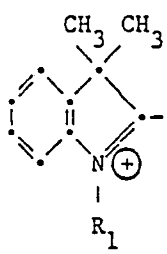 , 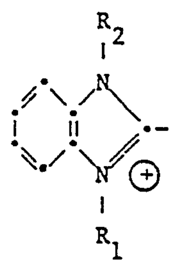 , 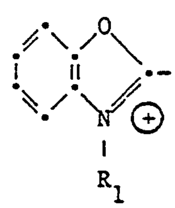 , 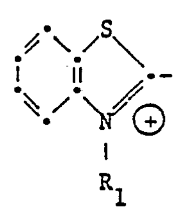

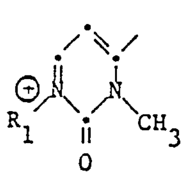 , 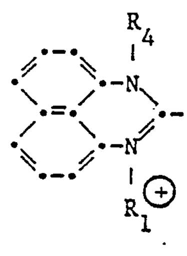 , 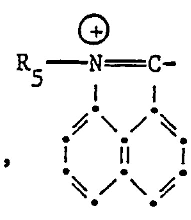 oder 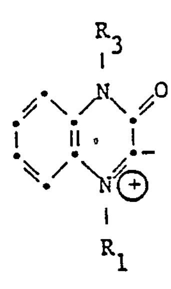

bedeutet,
wobei diese Ringe neben den Substituenten $R_1$-$R_5$ noch durch Nitro, Halogen, Cyano, $C_1$-$C_4$-Alkyl, $C_1$-$C_4$-Alkoxy, Acetylamino oder Dimethylamino substituiert sein können und worin $R_1$, $R_2$, $R_3$ und $R_4$ unabhängig voneinander $C_1$-$C_8$-Alkyl, $C_2$-$C_8$-Alkenyl oder $C_3$-$C_6$ Cycloalkyl bedeuten, wobei die Alkyl-, Alkenyl- oder Cycloalkylkette durch Sauerstoffoder Stickstoffatome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyl- oder Benzylcarbamoyloxy substituiert sein kann und $R_5$ für Phenyl steht oder die Bedeutung von $R_1$ hat.

8. Methinazoverbindungen nach Anspruch 7, worin A die Ergänzung zu einem der folgenden Ringe

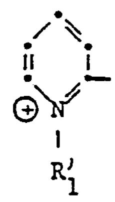 , 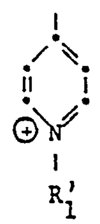 , 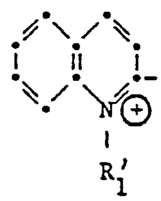 , 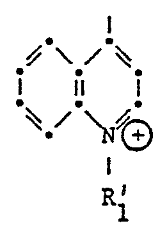 , 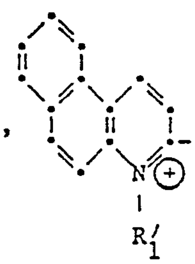

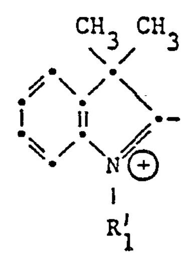 , 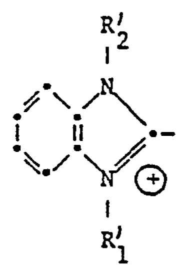 oder 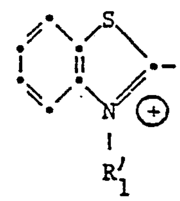 ,

worin $R'_1$ und $R'_2$ unabhängig voneinander für $C_1$-$C_4$-Alkyl, Benzyl, Cyclohexyl, Hydroxyalkyl oder $C_3$-$C_4$-Alkenyl stehen und die genannten Ringe ansonsten unsubstituiert oder durch Halogen, Cyano, $C_1$-$C_4$-Alkyl, $C_1$-$C_4$-Hydroxyalkyl oder $C_1$-$C_4$-Alkoxy substituiert sind.

9. Methinazoverbindungen nach Anspruch 8, worin A die Ergänzung zu einem Pyridinium- oder 3,3-Dimethylindoleniniumring bedeuten, worin $R'_1$ für Methyl steht.

10. Methinazoverbindungen nach einem der Ansprüche 1-9, worin KK den Rest eines Derivates der Acetessigsäure bedeutet.

11. Methinazoverbindungen nach Anspruch 10, worin KK den Rest einer Acetoacetylamid- oder -ester-Kupplungskomponente bedeutet.

12. Methinazoverbindungen nach Anspruch 10, worin KK den Rest einer Kupplungskomponente der Formel

$$Z—CH_2—CO—CH_2—CO—R_6,\ R_6—CO—CH_2—CO—R_6 \text{ oder } NC—CH_2—CO—R_6$$

bedeutet, worin Z Wasserstoff, Halogen oder eine gegebenenfalls substituierte aliphatische, cycloaliphatische oder aromatische Amino- oder Ammoniumgruppe, und

$R_6$ gegebenenfalls substituiertes Alkoxy, Cycloalkoxy, Benzyloxy oder Phenoxy, unsubstituiertes oder mono- oder disubstituiertes Amino oder eine 5- oder 6-gliedrige cyclische gesättigte oder ungesättigte Aminogruppe bedeuten.

13. Methinazoverbindungen nach Anspruch 12, worin KK den Rest einer Kupplungskomponente der Formel $Z—CH_2—CO—CH_2—CO—R_6$ bedeutet.

14. Methinazoverbindungen nach Anspruch 12 oder 13, worin $R_6$ Alkoxy mit 1-8 Kohlenstoffatomen oder Cycloalkoxy, Benzyloxy oder Phenoxy bedeutet, wobei die genannten Gruppen unsubstituiert oder durch $C_1$-$C_4$-Alkyl, $C_1$-$C_4$-Alkoxy, Halogen, Acylamino, Carbonamido, Sulfonamido, Dialkylamino, $C_1$-$C_4$-Alkylcarbonyl, $C_1$-$C_4$-Alkoxycarbonyl, Hydroxy oder Phenyl substituiert sind ; oder

$R_6$ einen Rest der Formel

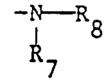

wobei

$R_7$ $C_1$-$C_4$-Alkyl, oder Wasserstoff und

$R_8$ Wasserstoff, gegebenenfalls substituiertes $C_1$-$C_8$-Alkyl, Cycloalkyl, gegebenenfalls substituiertes Benzyl oder einen Phenylrest der Formel

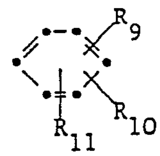

bedeutet, worin

$R_9$ Wasserstoff, $C_1$-$C_4$-Alkyl, $C_1$-$C_4$-Alkoxy, Halogen, Cyano, Nitro, Dialkylamino, Phenylamino

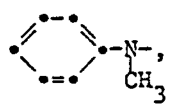

Phenyl, Acylamino, Carbonamido, Sulfonamido, $C_1$-$C_4$-Alkylcarbonyl, $C_1$-$C_4$-Alkoxycarbonyl, $C_1$-$C_4$-Alkylsulfonyl, einen Rest der Formel $—(CH_2)_w$-$K^{\oplus}$ $An^{\ominus}$, wobei $K^{\oplus}$ für eine aliphatische oder aromatische Ammoniumgruppe, $An^{\ominus}$ für ein Anion und w für 1 oder 2 steht ; oder einen Rest der Formel

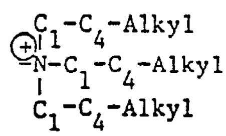

$R_{10}$ Wasserstoff, $C_1$-$C_4$-Alkyl, $C_1$-$C_4$-Alkoxy oder Halogen und

$R_{11}$ Wasserstoff, Halogen oder $C_1$-$C_4$-Alkyl bedeuten ; oder wobei

$R_8$ zusammen mit $R_7$, gegebenenfalls unter Einschluss weiterer Heteroatome, einen 5- oder 6-gliedrigen, gesättigten oder ungesättigten Ring bedeuten ; oder worin

$R_6$ eine durch einen gegebenenfalls substituierten heterocyclischen Ring substituierte Aminogruppe oder eine Gruppe der Formel

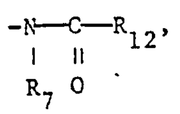 , 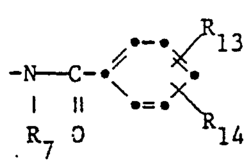 , 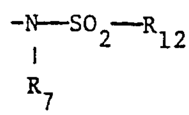 oder 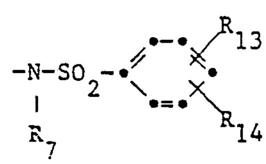

bedeutet, worin

$R_7$ die oben angegebene Bedeutung hat und

$R_{12}$ gegebenenfalls substituiertes $C_1$-$C_8$-Alkyl, Cycloalkyl, Amino, Alkylamino, Dialkylamino, Phenylamino, Alkoxy oder Phenoxy und

$R_{13}$ und $R_{14}$ unabhängig voneinander Wasserstoff, $C_1$-$C_4$-Alkyl, $C_1$-$C_4$-Alkoxy, Halogen oder Dialkylamino bedeuten.

15. Methinazoverbindungen nach einem der Ansprüche 12-14, worin Z Wasserstoff bedeutet.

16. Methinazoverbindungen nach Anspruch 14 oder 15, worin $R_6$ für

(Siehe Formel Seite 32 f.)

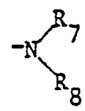

oder NH—$R_{14}$ steht, worin $R_{14}$ einen gegebenenfalls substituierten, ein- oder zweikernigen heterocyclischen Rest bedeutet, der 5- oder 6-gliedrige, carbo- und heterocyclische Ringe mit 1 oder 2 N-, O- oder/und S-Atomen als Ringglieder enthält.

17. Methinazoverbindungen nach Anspruch 1, worin R Wasserstoff, B Phenylen, A die Ergänzung zu einem Ring der Formel

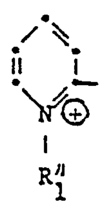 , 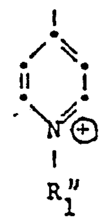 , 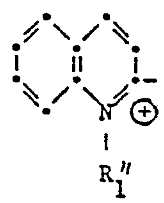 , 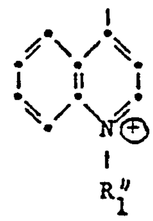

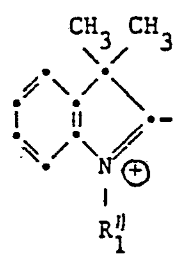 , 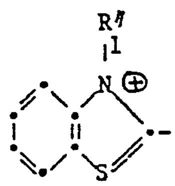 oder 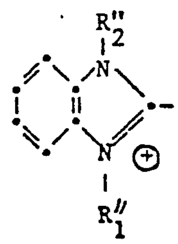

worin $R''_1$ und $R''_2$ jeweils $C_1$-$C_4$-Alkyl, vorzugsweise Methyl, Benzyl oder $C_1$-$C_4$-Hydroxy-alkyl und KK einen Rest der Formel

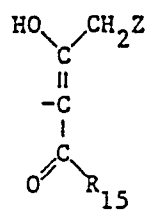

bedeuten, worin Z wasserstoff, Halogen oder

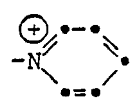,

vorzugsweise Wasserstoff, und $R_{15}$-$OR_{16}$, worin $R_{16}$ für $C_1$-$C_4$-Alkyl oder Phenyl steht, oder —HN—$R_{17}$ oder

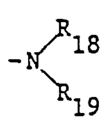

bedeuten, worin $R_{18}$ $C_1$-$C_4$-Alkyl, $C_{19}$ $C_1$-$C_4$-Alkyl oder Phenyl oder $R_{18}$ und $R_{19}$ gemeinsam die Ergänzung zu einem Morpholin-, Piperidin-, Piperazin-, Pyrrolidin- oder

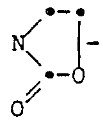 - Ring

und $R_{17}$ Wasserstoff, $C_1$-$C_4$-Alkyl, Phenyl-($C_1$-$C_4$)-alkyl, Cyclohexyl, Cyclohexyl-($C_1$-$C_4$)-alkyl, Benzoyl, Naphthyl oder eine Gruppe der Formel

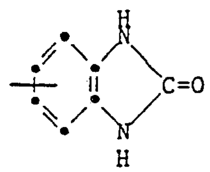 , 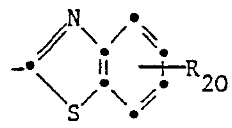 oder 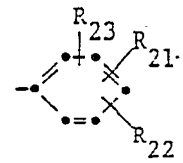

bedeuten, wobei $R_{20}$ Wasserstoff, Halogen, $C_1$-$C_4$-Alkyl oder $C_1$-$C_4$-Alkoxy, $R_{21}$ Wasserstoff, Halogen, $C_1$-$C_4$-Alkyl, $C_1$-$C_4$-Alkoxy, —NHCO-Alkyl($C_1$-$C_4$) oder —$SO_2NH_2$, $R_{22}$ Wasserstoff, Halogen, $C_1$-$C_4$-Alkyl oder $C_1$-$C_4$-Alkoxy und $R_{23}$ Wasserstoff oder Halogen bedeuten.

18. Methinazoverbindungen nach Anspruch 17, worin mindestens einer der Reste $R_{21}$, $R_{22}$ und $R_{23}$ von Wasserstoff und $C_1$-$C_4$-Alkyl verschieden ist.

19. Methinazoverbindungen nach Anspruch 17, worin A die Ergänzung zu einem Ring der Formel

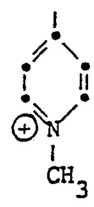 oder 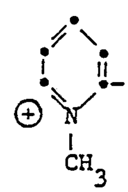

B 1,4-Phenylen, Z Wasserstoff und $R_{15}$—NH—$R'_{17}$ bedeuten, worin $R'_{17}$ für Benzoyl, Naphthyl,

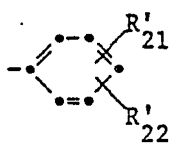 , 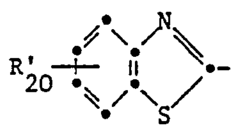 oder 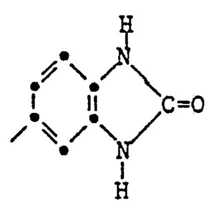

steht, wobei $R'_{21}$ $C_1$-$C_4$-Alkoxy oder NHCO-($C_1$-$C_4$)-Alkyl und $R'_{22}$ Wasserstoff, $C_1$-$C_4$-Alkyl oder $C_1$-$C_4$-Alkoxy und $R'_{20}$ Wasserstoff oder $C_1$-$C_4$-Alkoxy bedeuten.

20. Verfahren zur Herstellung der in Anspruch 1 definierten Methinazoverbindungen, dadurch gekennzeichnet, dass man Methinverbindungen der Formel

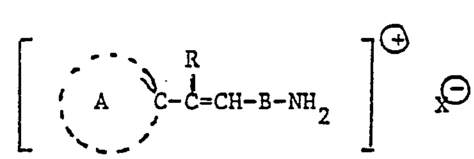

worin die allgemeinen Symbole wie in Anspruch 1 definiert sind, diazotiert und auf eine Kupplungskomponente HKK kuppelt, wobei KK wie in Anspruch 1 definiert ist.

21. Verfahren zur Herstellung der in Anspruch 1 definierten Methinazoverbindungen, dadurch gekennzeichnet, dass man eine Azoverbindung der Formel

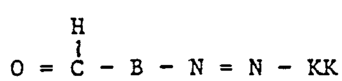

mit einer Verbindung der Formel

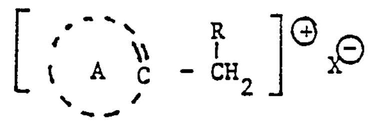

kondensiert, wobei die allgemeinen Symbole wie in Anspruch 1 definiert sind.

22. Verwendung der in Anspruch 1 definierten Methinazoverbindungen als Farbstoffe zum Färben oder Bedrucken von kationisch färbbaren Substraten.

23. Verwendung nach Anspruch 22 zum Färben oder Bedrucken von Polyacrylnitrilmaterialien, sauer modifizierten Polyamid- oder Polyestermaterialien oder Baumwolle.

24. Verwendung nach Anspruch 22 zum Färben oder Bedrucken von Papier und Karton.

25. Das nach einem der Ansprüche 22-24 gefärbte oder bedruckte Material.

**Patentansprüche** (für den Vertragsstaat AT)

1. Verwendung von Methinazoverbindungen der Formel

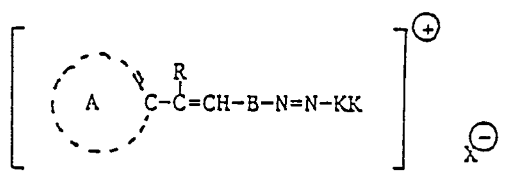

worin

A die Ergänzung zu einem heterocyclischen 5- oder 6-gliedrigen Ring mit einem quaternierten N-Atom als Ringglied, der weitere Heteroatome enthalten kann und der gegebenenfalls substituiert oder/und mit carbo- oder heterocyclischen Ringen kondensiert sein kann,

R Wasserstoff, Cyano oder $C_2$-$C_3$-Alkylen, das mit einem N-Atom des Ringes A zu einem 5- oder 6-gliedrigen Ring verbunden ist,

B gegebenenfalls substituiertes Phenylen oder Naphthylen,

$X^{\ominus}$ ein Anion und

KK den Rest eines Derivates der Acetessigsäure, Malonsäure oder Cyanessigsäure bedeutet, wobei für den Fall, dass A die Ergänzung zu einem Pyridiniumring bedeutet, KK nicht für den Rest des unsubstituierten oder im Anilinring alkylsubstituierten Acetoacetanilids stehen kann, als Farbstoffe zum Färben oder Bedrucken von kationisch färbbaren Substraten.

2. Verwendung nach Anspruch 1 von Methinazoverbindungen, worin A, R, B und $X^{\ominus}$ wie in Anspruch 1 definiert sind und KK den Rest eines Derivates der Acetessigsäure, Malonsäure oder Cyanessigsäure bedeutet, mit Ausnahme des Restes des unsubstituierten oder im Anilinring alkylsubstituierten Acetoacetanilids.

3. Verwendung nach Anspruch 1 oder 2 von Methinazoverbindungen, worin R Wasserstoff bedeutet.

4. Verwendung nach einem der Ansprüche 1-3 von Methinazoverbindungen, worin B Phenylen, vorzugsweise 1,4-Phenylen, bedeutet.

5. Verwendung nach einem der Ansprüche 1-4 von Methinazoverbindungen, worin A die Ergänzung zu einem quaternierten, gegebenenfalls substituierten oder/und mit carbocyclischen Ringen kondensierten Pyridin-, Pyrrol-, Pyrimidin-, Chinolin-, Thiazol-, Imidazol- oder Oxazolring bedeutet.

6. Verwendung nach Anspruch 5 von Methinazoverbindungen, worin A die Ergänzung zu einem quaternierten, gegebenenfalls substituierten oder/und mit carbocyclischen Ringen kondensierten Pyridinring bedeutet.

7. Verwendung nach Anspruch 5 von Methinazoverbindungen, worin A die Ergänzung zu einem der folgenden Ringe

(Siehe Formel Seite 35 f.)

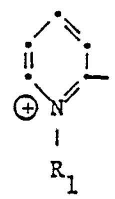 , 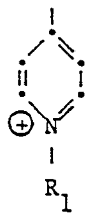 , 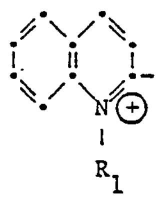 , 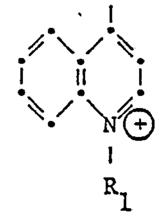 , 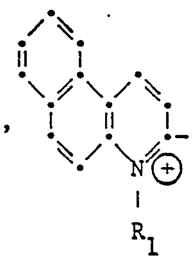

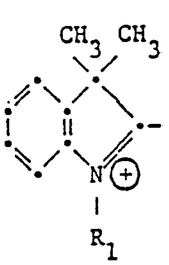 , 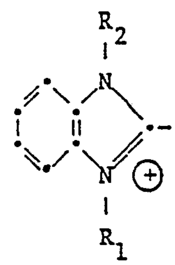 , 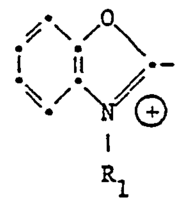 , 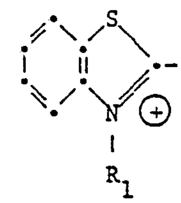

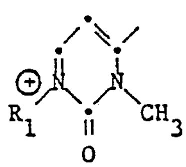 , 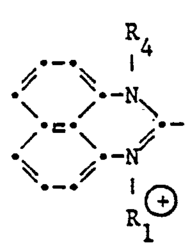 , 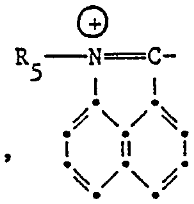 oder 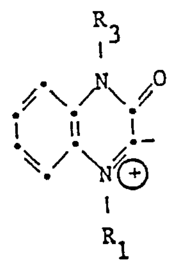 ,

bedeutet, wobei diese Ringe neben den Substituenten $R_1$-$R_5$ noch durch Nitro, Halogen, Cyano, $C_1$-$C_4$-Alkyl, $C_1$-$C_4$-Alkoxy, Acetylamino oder Dimethylamino substituiert sein können und worin $R_1$, $R_2$, $R_3$ und $R_4$ unabhängig voneinander $C_1$-$C_8$-Alkyl, $C_2$-$C_8$-Alkenyl oder $C_3$-$C_6$ Cycloalkyl bedeuten, wobei die Alkyl-, Alkenyl- oder Cycloalkylkette durch Sauerstoffoder Stickstoffatome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyl- oder Benzylcarbamoyloxy substituiert sein kann und $R_5$ für Phenyl steht oder die Bedeutung von $R_1$ hat.

8. Verwendung nach Anspruch 7 von Methinazoverbindungen, worin A die Ergänzung zu einem der folgenden Ringe

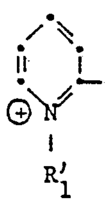 , 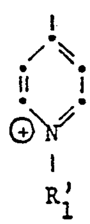 , 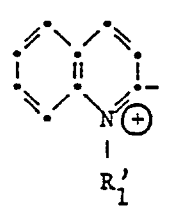 , 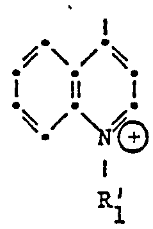 , 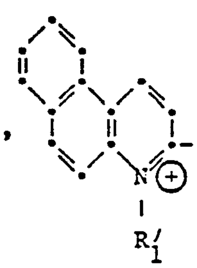

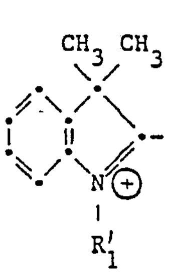 , 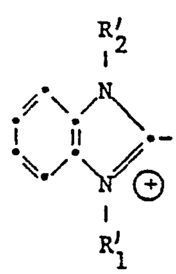 oder 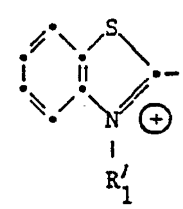 ,

worin $R'_1$ und $R'_2$ unabhängig voneinander für $C_1$-$C_4$-Alkyl, Benzyl, Cyclohexyl, Hydroxyalkyl oder $C_3$-$C_4$-

Alkenyl stehen und die genannten Ringe ansonsten unsubstituiert oder durch Halogen, Cyano, $C_1$-$C_4$-Alkyl, $C_1$-$C_4$-Hydroxyalkyl oder $C_1$-$C_4$-Alkoxy substituiert sind.

9. Verwendung nach Anspruch 8 von Methinazoverbindungen, worin A die Ergänzung zu einem Pyridinium- oder 3,3-Dimethylindoleniniumring bedeuten, worin $R_1$ für Methyl steht.

10. Verwendung nach einem der Ansprüche 1-9 von Methinazoverbindungen, worin KK den Rest eines Derivates der Acetessigsäure bedeutet.

11. Verwendung nach Anspruch 10 von Methinazoverbindungen, worin KK den Rest einer Acetoacetylamid- oder -ester-Kupplungskomponente bedeutet.

12. Verwendung nach Anspruch 10 von Methinazoverbindungen, worin KK den Rest einer Kupplungskomponente der Formel

$$Z—CH_2—CO—CH_2—CO—R_6,\ R_6—CO—CH_2—CO—R_6 \text{ oder } NC—CH_2—CO—R_6$$

bedeutet, worin Z Wasserstoff, Halogen oder eine gegebenenfalls substituierte aliphatische, cycloaliphatische oder aromatische Amino- oder Ammoniumgruppe, und

$R_6$ gegebenenfalls substituiertes Alkoxy, Cycloalkoxy, Benzyloxy oder Phenoxy, unsubstituiertes oder mono- oder disubstituiertes Amino oder eine 5- oder 6-gliedrige cyclische gesättigte oder ungesättigte Aminogruppe bedeuten.

13. Verwendung nach Anspruch 12 von Methinazoverbindungen, worin KK den Rest einer Kupplungskomponente der Formel $Z—CH_2—CO—CH_2—CO—R_6$ bedeutet.

14. Verwendung nach Anspruch 12 oder 13 von Methinazoverbindungen, worin $R_6$ Alkoxy mit 1-8 Kohlenstoffatomen oder Cycloalkoxy, Benzyloxy oder Phenoxy bedeutet, wobei die genannten Gruppen unsubstituierte oder durch $C_1$-$C_4$-Alkyl, $C_1$-$C_4$-Alkoxy, Halogen, Acylamino, Carbonamido, Sulfonamido, Dialkylamino, $C_1$-$C_4$-Alkylcarbonyl, $C_1$-$C_4$-Alkoxycarbonyl, Hydroxy oder Phenyl substituiert sind ; oder

$R_6$ einen Rest der Formel

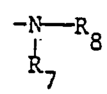

wobei

$R_7$ $C_1$-$C_4$-Alkyl, oder Wasserstoff und

$R_8$ Wasserstoff, gegebenenfalls substituiertes $C_1$-$C_8$-Alkyl, Cycloalkyl, gegebenenfalls substituiertes Benzyl oder einen Phenylrest der Formel

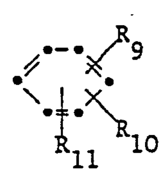

bedeutet, worin

$R_9$ Wasserstoff, $C_1$-$C_4$-Alkyl, $C_1$-$C_4$-Alkoxy, Halogen, Cyano, Nitro, Dialkylamino, Phenylamino,

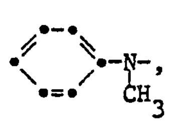

Phenyl, Acylamino, Carbonamido, Sulfonamido, $C_1$-$C_4$-Alkylcarbonyl, $C_1$-$C_4$-Alkoxycarbonyl, $C_1$-$C_4$-Alkylsulfonyl, einen Rest der Formel $—(CH_2)_w$-$K^{\oplus}$ $An^{\ominus}$, wobei $K^{\oplus}$ für eine aliphatische oder aromatische Ammoniumgruppe, $An^{\ominus}$ für ein Anion und w für 1 oder 2 steht ; oder einen Rest der Formel

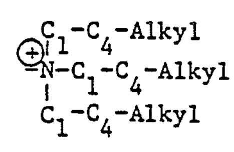

$R_{10}$ Wasserstoff, $C_1$-$C_4$-Alkyl, $C_1$-$C_4$-Alkoxy oder Halogen und

$R_{11}$ Wasserstoff, Halogen oder $C_1$-$C_4$-Alkyl bedeuten ; oder wobei

$R_8$ zusammen mit $R_7$, gegebenenfalls unter Einschluss weiterer Heteroatome, einen 5- oder 6-gliedrigen, gesättigten oder ungesättigten Ring bedeuten ; oder worin

$R_6$ eine durch einen gegebenenfalls substituierten heterocyclischen Ring substituierte Aminogruppe oder eine Gruppe der Formel

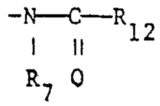, 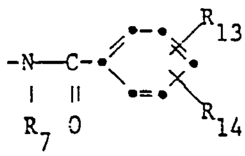, 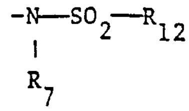 oder 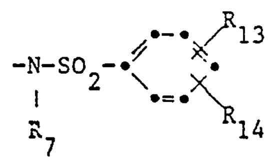

bedeutet, worin

$R_7$ die oben angegebene Bedeutung hat und

$R_{12}$ gegebenenfalls substituiertes $C_1$-$C_8$-Alkyl, Cycloalkyl, Amino, Alkylamino, Dialkylamino, Phenylamino, Alkoxy oder Phenoxy und

$R_{13}$ und $R_{14}$ unabhängig voneinander Wasserstoff, $C_1$-$C_4$-Alkyl, $C_1$-$C_4$-Alkoxy, Halogen oder Dialkylamino bedeuten.

15. Verwendung nach einem der Ansprüche 12-14 von Methinazoverbindungen, worin Z Wasserstoff bedeutet.

16. Verwendung nach Anspruch 14 oder 15 von Methinazoverbindungen, worin $R_6$ für

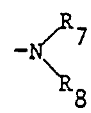

oder NH—$R_{14}$ steht, worin $R_{14}$ einen gegebenenfalls substituierten, ein- oder zweikernigen heterocyclischen Rest bedeutet, der 5- oder 6-gliedrige, carbo- und heterocyclische Ringe mit 1 oder 2 N-, O- oder/und S-Atomen als Ringglieder enthält.

17. Verwendung nach Anspruch 1 von Methinazoverbindungen, worin R Wasserstoff, B Phenylen, A die Ergänzung zu einem Ring der Formel

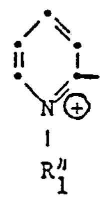, 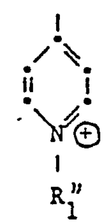, 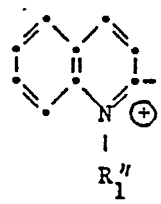, 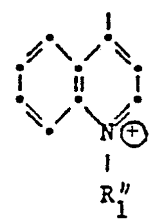

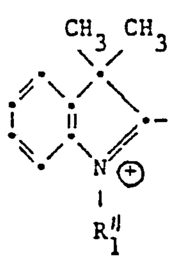, 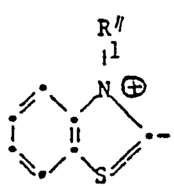 oder 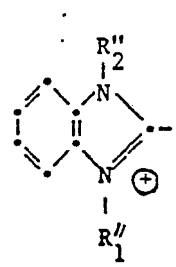

worin $R''_1$ und $R''_2$ jeweils $C_1$-$C_4$-Alkyl, vorzugsweise Methyl, Benzyl oder $C_1$-$C_4$-Hydroxy-alkyl und KK einen Rest der Formel

(Siehe Formel Seite 38 f.)

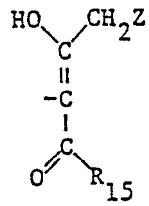

bedeuten, worin Z Wasserstoff, Halogen oder

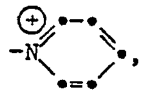

vorzugsweise Wasserstoff, und $R_{15}$ —$OR_{16}$, worin $R_{16}$ für $C_1$-$C_4$-Alkyl oder Phenyl steht, oder —NH-$R_{17}$ oder

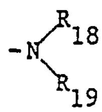

bedeuten, worin $R_{18}$ $C_1$-$C_4$-Alkyl, $C_{19}$ $C_1$-$C_4$-Alkyl oder Phenyl oder $R_{18}$ und $R_{19}$ gemeinsam die Ergänzung zu einem Morpholin-, Piperidin-, Piperazin-, Pyrrolidin- oder

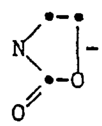 Ring

und $R_{17}$ Wasserstoff, $C_1$-$C_4$-Alkyl, Phenyl-($C_1$-$C_4$)-alkyl, Cyclohexyl, Cyclohexyl-($C_1$-$C_4$)-alkyl, Benzoyl, Naphthyl oder eine Gruppe der Formel

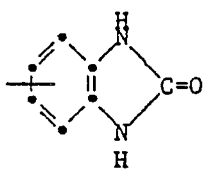 , 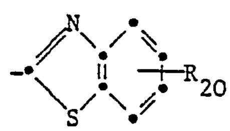 oder 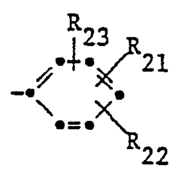

bedeuten, wobei $R_{20}$ Wasserstoff, Halogen, $C_1$-$C_4$-Alkyl oder $C_1$-$C_4$-Alkoxy, $R_{21}$ Wasserstoff, Halogen, $C_1$-$C_4$-Alkyl, $C_1$-$C_4$-Alkoxy, —NHCO-Alkyl($C_1$-$C_4$) oder —$SO_2NH_2$, $R_{22}$ Wasserstoff, Halogen, $C_1$-$C_4$-Alkyl oder $C_1$-$C_4$-Alkoxy und $R_{23}$ Wasserstoff oder Halogen bedeuten.

18. Verwendung nach Anspruch 17 von Methinazoverbindungen, worin mindestens einer der Reste $R_{21}$, $R_{22}$ und $R_{23}$ von Wasserstoff und $C_1$-$C_4$-Alkyl verschieden ist.

19. Verwendung nach Anspruch 17 von Methinazoverbindungen, worin A die Ergänzung zu einem Ring der Formel

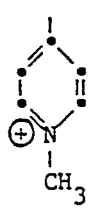 oder 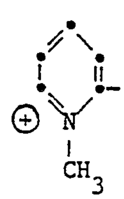

B 1,4-Phenylen, Z Wasserstoff und $R_{15}$ —NH—$R'_{17}$ bedeuten, worin $R'_{17}$ für Benzoyl, Naphthyl,

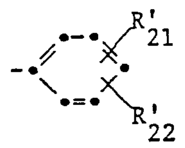 , 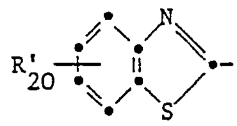 oder 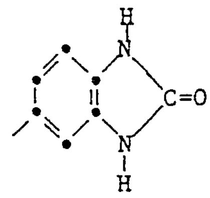

steht, wobei $R'_{21}$ $C_1$-$C_4$-Alkoxy oder NHCO-($C_1$-$C_4$)-Alkyl und $R'_{22}$ Wasserstoff, $C_1$-$C_4$-Alkyl oder $C_1$-$C_4$-Alkoxy und $R'_{20}$ Wasserstoff oder $C_1$-$C_4$-Alkoxy bedeuten.

20. Verwendung nach einem der Ansprüche 1-19 zum Färben oder Bedrucken von Polyacrylnitrilmaterialien, sauer modifizierten Polyamid- oder Polyestermaterialien oder Baumwolle.

21. Verwendung nach einem der Ansprüche 1-19 zum Färben oder Bedrucken von Papier und Karton.

22. Verfahren zur Herstellung der in Anspruch 1 definierten Methinazoverbindungen, dadurch gekennzeichnet, dass man Methinverbindungen der Formel

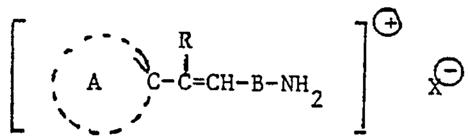

worin die allgemeinen Symbole wie in Anspruch 1 definiert sind, diazotiert und auf eine Kupplungskomponente HKK kuppelt, wobei KK wie in Anspruch 1 definiert ist.

23. Verfahren zur Herstellung der in Anspruch 1 definierten Methinazoverbindungen, dadurch gekennzeichnet, dass man eine Azoverbindung der Formel

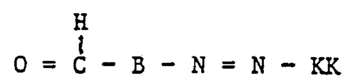

mit einer Verbindung der Formel

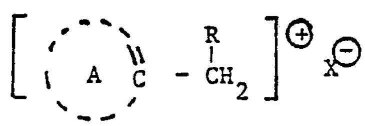

kondensiert, wobei die allgemeinen Symbole wie in Anspruch 1 definiert sind.

**Claims** (for the Contracting States : DE, GB, FR, CH, LI, IT, BE, SE)

1. A methine-azo compound of the formula

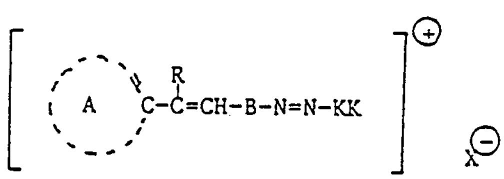

in which

A is the complement to a heterocyclic 5- or 6-membered ring which has a quaternised N atom as a ring member, which can contain further hetero atoms and which can be substituted or/and be fused with carbocyclic or heterocyclic rings,

R is hydrogen, cyano or $C_2$-$C_3$ alkylene which is bonded to an N atom of ring A to form a 5- or 6-membered ring,

B is substituted or unsubstituted phenylene or naphthylene,

$X^-$ is an anion and

KK is the radical of a derivative of acetoacetic acid, malonic acid, or cyanoacetic acid, except that, if A is the complement to a pyridinium ring, KK cannot be the radical of acetoacetanilide which is unsubstituted or alkyl-substituted in the aniline ring.

2. A methine-azo compound according to claim 1, in which A, R, B and $X^-$ are as defined in claim 1 and KK is the radical of a derivative of acetoacetic acid, malonic acid, or cyanoacetic acid, except for the radical of unsubstituted acetoacetanilide or of acetoacetanilide which is alkyl-substituted in the aniline ring.

3. A methine-azo compound according to claim 1 or 2, in which R is hydrogen.

4. A methine-azo compound according to any one of claims 1-3, in which B is phenylene, preferably, 1,4-phenylene.

5. A methine-azo compound according to any one of claims 1-4, in which A is the complement to a quaternised pyridine, pyrrole, pyrimidine, quinoline, thiazole, imidazole or oxazole ring which can be substituted or/and be fused with carbocyclic rings.

6. A methine-azo compound according to claim 5, in which A is the complement to a quaternised pyridine ring which can be substituted or/and be fused with carbocyclic rings.

7. A methine-azo compound according to claim 5, in which A is the complement to one of the following rings

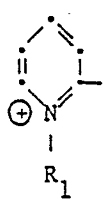 , 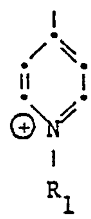 , 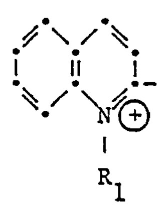 , 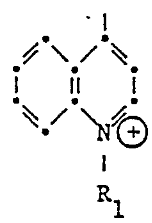 , 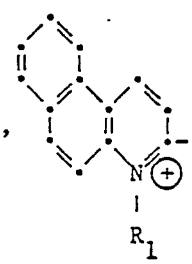

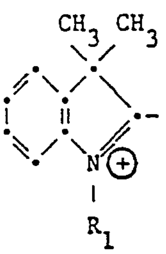 , 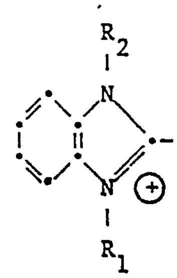 , 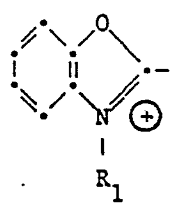 , 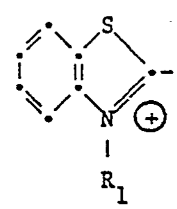

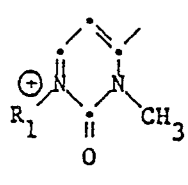 , 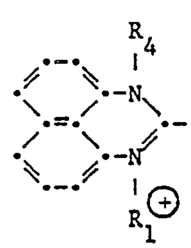 , 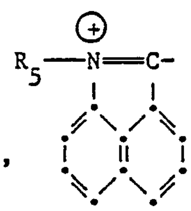 or 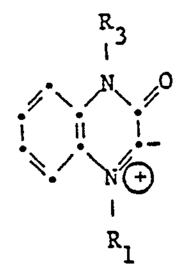

it being possible for these rings to be substituted, in addition to the substituents $R_1$-$R_5$, by nitro, halogen, cyano, $C_1$-$C_4$ alkyl, $C_1$-$C_4$ alkoxy, acetylamino or dimethylamino, and in which $R_1$, $R_2$, $R_3$ and $R_4$, independently of one another, are $C_1$-$C_8$ alkyl, $C_2$-$C_8$ alkenyl, or $C_3$-$C_6$-cycloalkyl, it being possible for the alkyl, alkenyl or cycloalkyl chain to be interrupted by oxygen or nitrogen atoms and/or be substituted by halogen, cyano, hydroxyl, alkoxy, phenyl, phenoxy, dialkylamino, trialkylammonium, acetylamino, alkylcarbonyl, alkoxycarbonyl, alkylsulfonyl, phenylsulfonyl, benzylsulfonyl, alkylsulfonamido, phenylsulfonamido, benzylsulfonamido, alkylcarbonylamino, benzoyl, benzoylamino, alkylcarbamoyl, phenylcarbamoyl, benzylcarbamoyl, alkylcarbamoyloxy, phenylcarbamoyloxy or benzylcarbamoyloxy, and $R_5$ is phenyl or is defined as $R_1$.

8. A methine-azo compound according to claim 7, in which A is the complement to one of the following rings

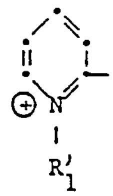 , 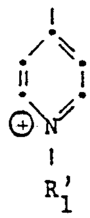 , 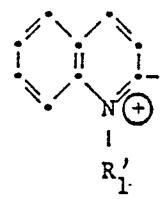 , 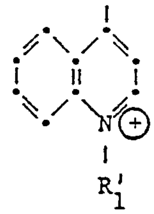 , 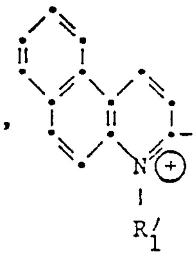

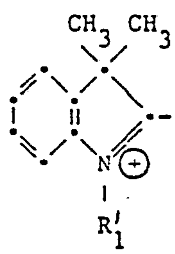 , 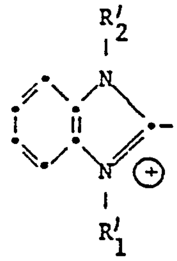 or 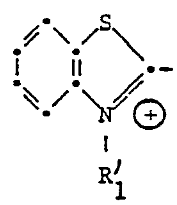 ,

in which $R'_1$ and $R''_2$, independently of each other, are $C_1$-$C_4$ alkyl, benzyl, cyclohexyl, hydroxyalkyl or $C_3$-$C_4$ alkenyl and the stated rings are otherwise unsubstituted or substituted by halogen, cyano, $C_1$-$C_4$ alkyl, $C_1$-$C_4$ hydroxyalkyl or $C_1$-$C_4$ alkoxy.

9. A methine-azo compound according to claim 8, in which A is the complement to a pyridinium or 3,3-dimethyl-indoleninium ring in which $R'_1$ is methyl.

10. A methine-azo compound according to any one of claims 1-9, in which KK is the radical of a derivative of acetoacetic acid.

11. A methine-azo compound according to claim 10, in which KK is the radical of an acetoacetylamide or acetoacetate coupling component.

12. A methine-azo compound according to claim 10, in which KK is the radical of a coupling component of the formula

$$Z—CH_2—CO—CH_2—CO—R_6,\ R_6—CO—CH_2—CO—R_6 \text{ or } NC—CH_2—CO—R_6$$

in which Z is hydrogen, halogen or a substituted or unsubstituted aliphatic, cycloaliphatic or aromatic amino or ammonium group, and $R_6$ is substituted or unsubstituted alkoxy, cycloalkoxy, benzyloxy or phenoxy, unsubstituted or monosubstituted or disubstituted amino or a 5- or 6-membered cyclic saturated or unsaturated amino group.

13. A methine-azo compound according to claim 12, in which KK is the radical of a coupling component of the formula $Z—CH_2—CO—CH_2—CO—R_6$.

14. A methine-azo compound according to claim 12 or 13, in which $R_6$ is alkoxy having 1-8 carbon atoms or cycloalkoxy, benzyloxy or phenoxy, the stated groups being unsubstituted or substituted by $C_1$-$C_4$ alkyl, $C_1$-$C_4$ alkoxy, halogen, acylamino, carboxamido, sulfonamido, dialkylamino, $C_1$-$C_4$ alkylcarbonyl, $C_1$-$C_4$ alkoxycarbonyl, hydroxyl or phenyl ; or $R_6$ is a radical of the formula

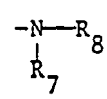

where

$R_7$ is $C_1$-$C_4$ alkyl or hydrogen and

$R_8$ is hydrogen, substituted or unsubstituted $C_1$-$C_8$ alkyl, cycloalkyl, substituted or unsubstituted benzyl or a phenyl radical of the formula

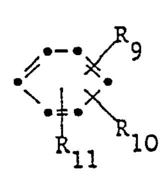

in which

$R_9$ is hydrogen, $C_1$-$C_4$ alkyl, $C_1$-$C_4$ alkoxy, halogen, cyano, nitro, dialkylamino, phenylamino,

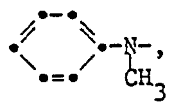

phenyl, acylamino, carboxamido, sulfonamido, $C_1$-$C_4$ alkylcarbonyl, $C_1$-$C_4$ alkoxycarbonyl, $C_1$-$C_4$ alkylsulfonyl, a radical of the formula $-(CH_2)_w$-$K^+An^-$, where $K^+$ is an aliphatic or aromatic ammonium group, $An^-$ is an anion and w is 1 or 2 ; or a radical of the formula

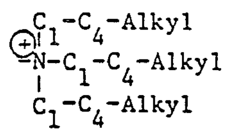

$R_{10}$ is hydrogen, $C_1$-$C_4$ alkyl, $C_1$-$C_4$ alkoxy or halogen and

$R_{11}$ is hydrogen, halogen or $C_1$-$C_4$ alkyl ; or where

$R_8$, together with $R_7$ and if desired with the inclusion of further hetero atoms, is a 5- or 6-membered, saturated or unsaturated ring ; or in which

$R_6$ is an amino group which is substituted by a substituted or unsubstituted heterocyclic ring or is a group of the formula

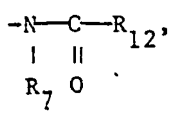, 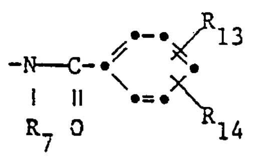, 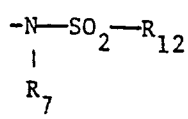 or 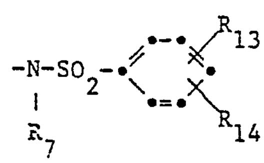

in which

$R_7$ is a defined above and

$R_{12}$ is substituted or unsubstituted $C_1$-$C_8$ alkyl, cycloalkyl, amino, alkylamino, dialkylamino, phenylamino, alkoxy or phenoxy and

$R_{13}$ and $R_{14}$, independently of each other, are hydrogen, $C_1$-$C_4$ alkyl, $C_1$-$C_4$ alkoxy, halogen or dialkylamino.

15. A methine-azo compound according to any one of claims 12-14, in which Z is hydrogen.

16. A methine-azo compound according to claim 14 or 15, in which $R_6$ is

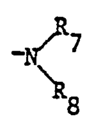

or NH—$R_{14}$, in which $R_{14}$ is a substituted or unsubstituted mononuclear or binuclear heterocyclic radical which contains 5- or 6-membered, carbocyclic and heterocyclic rings having 1 or 2 N, O or/and S atoms as ring members.

17. A methine-azo compound according to claim 1, in which R is hydrogen, B is phenylene, A is the complement to a ring of the formula

(See formula page 43)

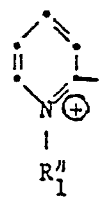 , 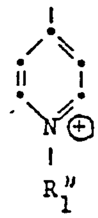 , 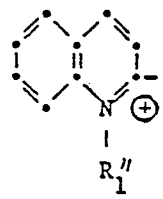 , 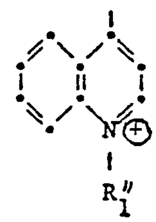

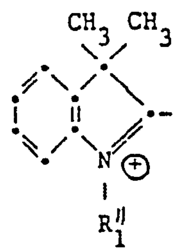 , 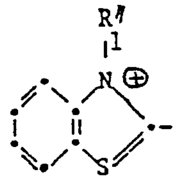 or 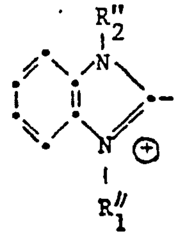

in which $R''_1$ and $R''_2$ are each $C_1$-$C_4$ alkyl, preferably methyl, benzyl or $C_1$-$C_4$ hydroxyalkyl, and KK is a radical of the formula

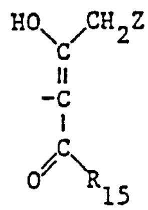

in which Z is hydrogen, halogen or —N

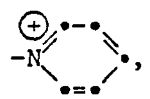

preferably hydrogen, and $R_{15}$ is $—OR_{16}$, in which $R_{16}$ is $C_1$-$C_4$ alkyl or phenyl, or $—NH—R_{17}$ or

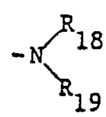

in which $R_{18}$ is $C_1$-$C_4$ alkyl, $R_{19}$ is $C_1$-$C_4$ alkyl or phenyl or $R_{18}$ and $R_{19}$ together are the complement to a morpholine, piperidine, piperazine, pyrrolidine or

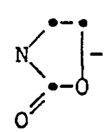

ring and $R_{17}$ is hydrogen, $C_1$-$C_4$ alkyl, phenyl-($C_1$-$C_4$)-alkyl, cyclohexyl, cyclohexyl-($C_1$-$C_4$)-alkyl, benzoyl, naphthyl or a group of the formula

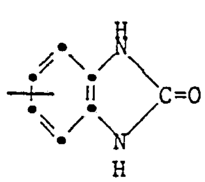 , 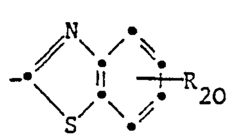 or 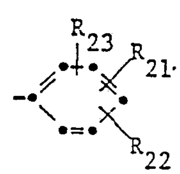

where $R_{20}$ is hydrogen, halogen, $C_1$-$C_4$ alkyl or $C_1$-$C_4$ alkoxy, $R_{21}$ is hydrogen, halogen, $C_1$-$C_4$ alkyl, $C_1$-$C_4$ alkoxy, —NHCO-alkyl($C_1$-$C_4$) or $SO_2NH_2$, $R_{22}$ is hydrogen, halogen, $C_1$-$C_4$ alkyl or $C_1$-$C_4$ alkoxy and $R_{23}$ is hydrogen or halogen.

18. A methine-azo compound according to claim 17, in which at least one of the radicals $R_{21}$, $R_{22}$ and $R_{23}$ is different from hydrogen and $C_1$-$C_4$ alkyl.

19. A methine-azo compound according to claim 17, in which A is the complement to a ring of the formula

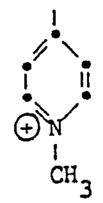

or

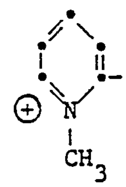

B is 1,4-phenylene, Z is hydrogen and $R_{15}$ is —NH—$R'_{17}$, in which $R'_{17}$ is benzoyl, naphthyl,

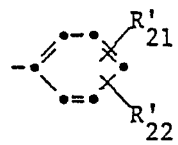

,

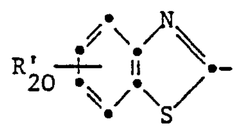

or

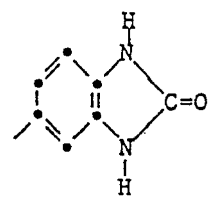

where $R'_{21}$ is $C_1$-$C_4$ alkoxy or NHCO-($C_1$-$C_4$)-alkyl and $R'_{22}$ is hydrogen, $C_1$-$C_4$ alkyl or $C_1$-$C_4$ alkoxy and $R'_{20}$ is hydrogen or $C_1$-$C_4$ alkoxy.

20. A process for preparing the methine-azo compound defined in claim 1, which comprises diazotising a methine compound of the formula

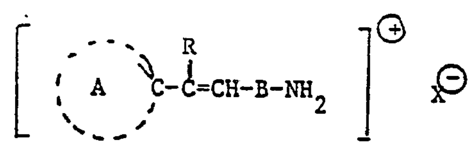

in which the general symbols are as defined in claim 1, and coupling onto a coupling component HKK where KK is a defined in claim 1.

21. A process for preparing the methine-azo compound defined in claim 1, which comprises condensing an azo compound of the formula

$$O = \overset{H}{C} - B - N = N - KK$$

with a compound of the formula

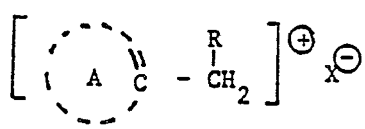

the general symbols being as defined in claim 1.

22. Use of the methine-azo compound defined in claim 1 as a dye for dyeing or printing cationically dyeable substrates.

23. Use according to claim 22, for dyeing or printing polyacrylonitrile materials, acid-modified nylon or polyester materials or cotton.

24. Use according to claim 22, for dyeing or printing paper and board.

25. The material dyed or printed according to any one of claims 22-24.

**Claims** (for the Contracting State AT)

1. Use of a methine-azo compound of the formula

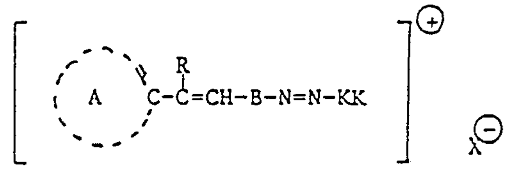

in which

A is the complement to a heterocyclic 5- or 6-membered ring which has a quaternised N atom as a ring member, which can contain further hetero atoms and which can be substituted or/and be fused with carbocyclic or heterocyclic rings,

R is hydrogen, cyano or $C_2$-$C_3$ alkylene which is bonded to an N atom of ring A to form a 5- or 6-membered ring,

B is substituted or unsubstituted phenylene or naphthylene,

$X^-$ is an anion and

KK is the radical of a derivative of acetoacetic acid, malonic acid, or cyanoacetic acid, except that, if A is the complement to a pyridinium ring, KK cannot be the radical of acetoacetanilide which is unsubstituted or alkyl-substituted in the aniline ring, as a dye for dyeing or printing cationically dyeable substrates.

2. Use according to claim 1 of a methine-azo compound, in which A, R, B and $X^-$ are as defined in claim 1 and KK is the radical of a derivative of acetoacetic acid, malonic acid, or cyanoacetic acid, except for the radical of unsubstituted acetoacetanilide or of acetoacetanilide which is alkyl-substituted in the aniline ring.

3. Use according to claim 1 or 2 of a methine-azo compound, in which R is hydrogen.

4. Use according to any one of claims 1-3 of a methine-azo compound, in which B is phenylene, preferably 1,4-phenylene.

5. Use according to any one of claims 1-4 of a methine-azo compound, in which A is the complement to a quaternised pyridine, pyrrole, pyrimidine, quinoline, thiazole, imidazole or oxazole ring which can be substituted or/and be fused with carbocyclic rings.

6. Use according to claim 5 of a methine-azo compound, in which A is the complement to a quaternised pyridine ring which can be substituted or/and be fused with carbocyclic rings.

7. Use according to claim 5 of a methine-azo compound, in which A is the complement to one of the following rings

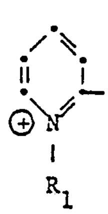 , 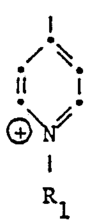 , 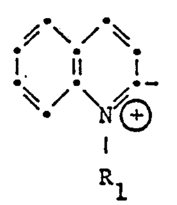 , 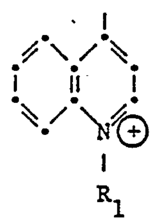 , 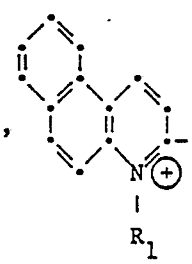

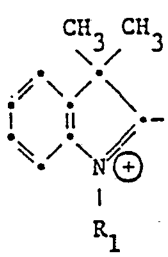 , 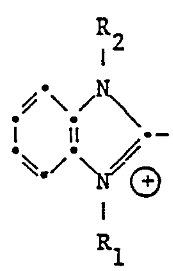 , 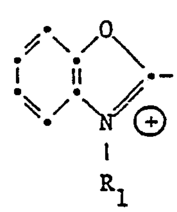 , 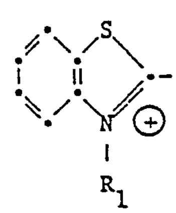

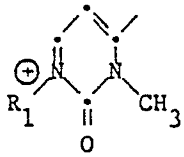 , 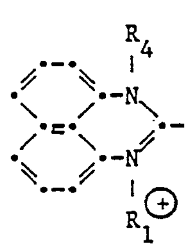 , 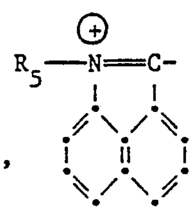 or 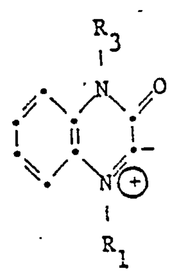

it being possible for these rings to be substituted, in addition to the substituents $R_1$-$R_5$, by nitro, halogen, cyano, $C_1$-$C_4$ alkyl, $C_1$-$C_4$ alkoxy, acetylamino or dimethylamino, and in which $R_1$, $R_2$, $R_3$ and $R_4$, independently of one another, are $C_1$-$C_8$ alkyl, $C_2$-$C_8$ alkenyl, or $C_3$-$C_6$-cycloalkyl, it being possible for the alkyl, alkenyl or cycloalkyl chain to be interrupted by oxygen or nitrogen atoms and/or be substituted by halogen, cyano, hydroxyl, alkoxy, phenyl, phenoxy, dialkylamino, trialkylammonium, acetylamino, alkylcarbonyl, alkoxycarbonyl, alkylsulfonyl, phenylsulfonyl, benzylsulfonyl, alkylsulfonamido, phenylsulfonamido, benzylsulfonamido, alkylcarbonylamino, benzoyl, benzoylamino, alkylcarbamoyl, phenylcarbamoyl, benzylcarbamoyl, alkylcarbamoyloxy, phenylcarbamoyloxy or benzylcarbamoyloxy, and $R_5$ is phenyl or is defined as $R_1$.

8. Use according to claim 7 of a methine-azo compound, in which A is the complement to one of the following rings

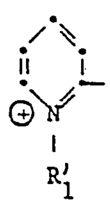 , 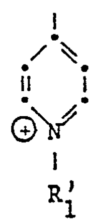 , 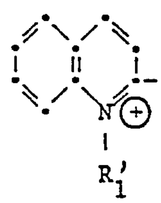 , 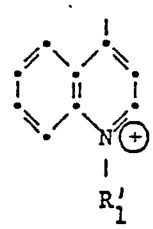 , 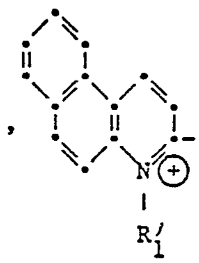

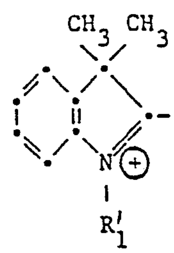 , 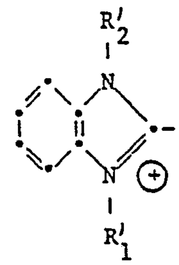 or 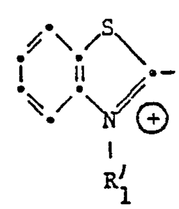 ;

in which $R'_1$ and $R''_2$, independently of each other, are $C_1$-$C_4$ alkyl, benzyl, cyclohexyl, hydroxyalkyl or $C_3$-$C_4$ alkenyl and the stated rings are otherwise unsubstituted or substituted by halogen, cyano, $C_1$-$C_4$ alkyl, $C_1$-$C_4$ hydroxyalkyl or $C_1$-$C_4$ alkoxy.

9. Use according to claim 8 of a methine-azo compound, in which A is the complement to a pyridinium or 3,3-dimethyl-indoleninium ring in which $R^1_1$ is methyl.

10. Use according to any one of claims 1-9 of a methine-azo compound, in which KK is the radical of a derivative of acetoacetic acid.

11. Use according to claim 10 of a methine-azo compound, in which KK is the radical of an acetoacetylamide or acetoacetate coupling component.

12. Use according to claim 10 of a methine-azo compound, in which KK is the radical of a coupling component of the formula

$$Z—CH_2—CO—CH_2—CO—R_6,\ R_6—CO—CH_2—CO—R_6 \text{ or } NC—CH_2—CO—R_6$$

in which Z is hydrogen, halogen or a substituted or unsubstituted aliphatic, cycloaliphatic or aromatic amino or ammonium group, and $R_6$ is substituted or unsubstituted alkoxy, cycloalkoxy, benzyloxy or phenoxy, unsubstituted or monosubstituted or disubstituted amino or a 5- or 6-membered cyclic saturated or unsaturated amino group.

13. Use according to claim 12 of a methine-azo compound, in which KK is the radical of a coupling component of the formula $Z—CH_2—CO—CH_2—CO—R_6$.

14. Use according to claim 12 or 13 of a methine-azo compound, in which $R_6$ is alkoxy having 1-8 carbon atoms or cycloalkoxy, benzyloxy or phenoxy, the stated groups being unsubstituted or substituted by $C_1$-$C_4$-alkyl, $C_1$-$C_4$ alkoxy, halogen, acylamino, carboxamido, sulfonamido, dialkylamino, $C_1$-$C_4$ alkylcarbonyl, $C_1$-$C_4$ alkoxycarbonyl, hydroxyl or phenyl ; or $R_6$ is a radical of the formula

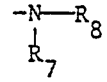

where

$R_7$ is $C_1$-$C_4$ alkyl or hydrogen and

$R_8$ is hydrogen, substituted or unsubstituted $C_1$-$C_8$ alkyl, cycloalkyl, substituted or unsubstituted benzyl or a phenyl radical of the formula

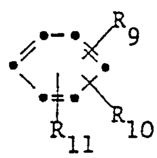

in which

$R_9$ is hydrogen, $C_1$-$C_4$ alkyl, $C_1$-$C_4$ alkoxy, halogen, cyano, nitro, dialkylamino, phenylamino,

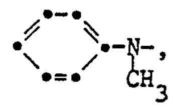

phenyl, acylamino, carboxamido, sulfonamido, $C_1$-$C_4$ alkylcarbonyl, $C_1$-$C_4$ alkoxycarbonyl, $C_1$-$C_4$ alkylsulfonyl, a radical of the formula $—(CH_2)_w$-$^+An^-$, where K is an aliphatic or aromatic ammonium group, $An^-$ is an anion and w is 1 or 2 ; or a radical of the formula

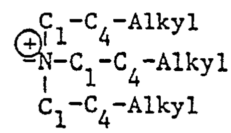

$R_{10}$ is hydrogen, $C_1$-$C_4$ alkyl, $C_1$-$C_4$ alkoxy or halogen and

$R_{11}$ is hydrogen, halogen or $C_1$-$C_4$ alkyl ; or where

$R_8$, together with $R_7$ and if desired with the inclusion of further hetero atoms, is a 5- or 6-membered, saturated or unsaturated ring ; or in which

$R_6$ is an amino group which is substituted by a substituted or unsubstituted heterocyclic ring or is a group of the formula

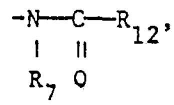, 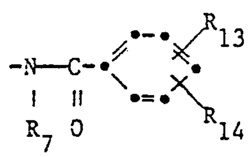, 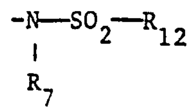 or 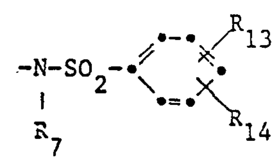

in which

$R_7$ is as defined above and

$R_{12}$ is substituted or unsubstituted $C_1$-$C_8$ alkyl, cycloalkyl, amino, alkylamino, dialkylamino, phenylamino, alkoxy or phenoxy and

$R_{13}$ and $R_{14}$, independently of each other, are hydrogen, $C_1$-$C_4$ alkyl, $C_1$-$C_4$ alkoxy, halogen or dialkylamino.

15. Use according to any one of claims 12-14 of a methine-azo compound, in which Z is hydrogen.

16. Use according to claim 14 or 15 of a methine-azo compound, in which $R_6$ is

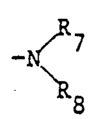

or NH—$R_{14}$, in which $R_{14}$ is a substituted or unsubstituted mononuclear or binuclear heterocyclic radical which contains 5- or 6-membered, carbocyclic and heterocyclic rings having 1 or 2 N, O or/and S atoms as ring members.

17. Use according to claim 1 of a methine-azo compound, in which R is hydrogen, B is phenylene, A is the complement to a ring of the formula

(See formula page 48)

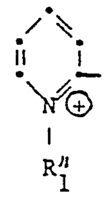 , 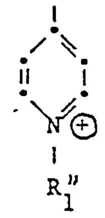 , 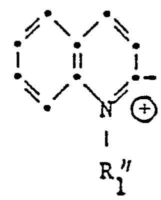 , 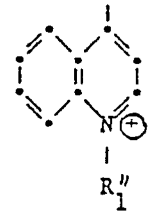

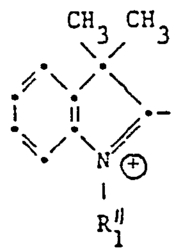 , 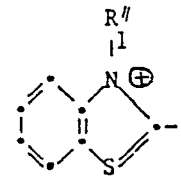 or 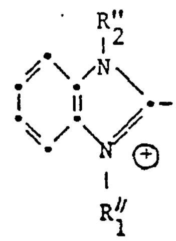

in which R"$_1$ and R"$_2$ are each $C_1$-$C_4$ alkyl, preferably methyl, benzyl or $C_1$-$C_4$ hydroxyalkyl, and KK is a radical of the formula

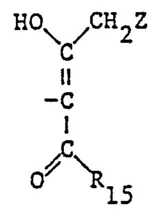

in which Z is hydrogen, halogen or

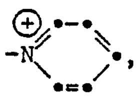 ,

preferably hydrogen, and $R_{15}$ is —$OR_{16}$, in which $R_{16}$ is $C_1$-$C_4$ alkyl or phenyl, or —NH—$R_{17}$ or

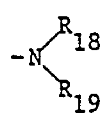

in which $R_{18}$ is $C_1$-$C_4$ alkyl, $R_{19}$ is $C_1$-$C_4$ alkyl or phenyl or $R_{18}$ and $R_{19}$ together are the complement to a morpholine, piperidine, piperazine, pyrrolidine or

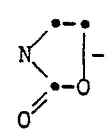

ring and $R_{17}$ is hydrogen, $C_1$-$C_4$ alkyl, phenyl-($C_1$-$C_4$)-alkyl, cyclohexyl, cyclohexyl-($C_1$-$C_4$)-alkyl, benzoyl, naphthyl or a group of the formula

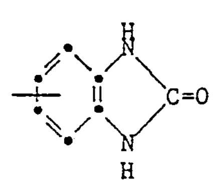 , 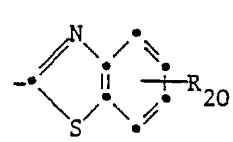 or 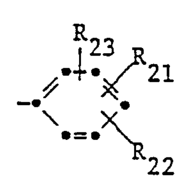 .

where $R_{20}$ is hydrogen, halogen, $C_1$-$C_4$ alkyl or $C_1$-$C_4$ alkoxy, $R_{21}$ is hydrogen, halogen, $C_1$-$C_4$ alkyl, $C_1$-$C_4$ alkoxy, —NHCO-alkyl ($C_1$-$C_4$) or —$SO_2NH_2$, $R_{22}$ is hydrogen, halogen, $C_1$-$C_4$ alkyl or $C_1$-$C_4$ alkoxy and $R_{23}$ is hydrogen or halogen.

18. Use according to claim 17 of a methine-azo compound, in which at least one of the radicals $R_{21}$, $R_{22}$ and $R_{23}$ is different from hydrogen and $C_1$-$C_4$ alkyl.

19. Use according to claim 17 of a methine-azo compound, in which A is the complement to a ring of the formula

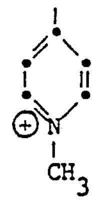 or 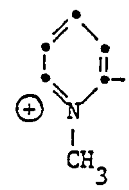

B is 1,4-phenylene, Z is hydrogen and $R_{15}$ is —NH—$R'_{17}$, in which $R'_{17}$ is benzoyl, naphthyl,

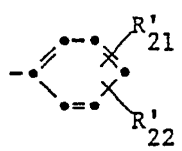 , 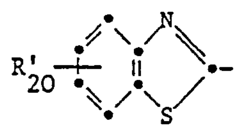 or 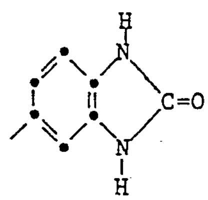

where $R'_{21}$ is $C_1$-$C_4$ alkoxy or NHCO-($C_1$-$C_4$)-alkyl and $R'_{22}$ is hydrogen, $C_1$-$C_4$ alkyl or $C_1$-$C_4$ alkoxy and $R'_{20}$ is hydrogen or $C_1$-$C_4$ alkoxy.

20. Use according to any one of claims 1-19, for dyeing or printing polyacrylonitrile materials, acid-modified nylon or polyester materials or cotton.

21. Use according to any one of claims 1-19, for dyeing or printing paper and board.

22. A process for preparing the methine-azo compound defined in claim 1, which comprises diazotising a methine compound of the formula

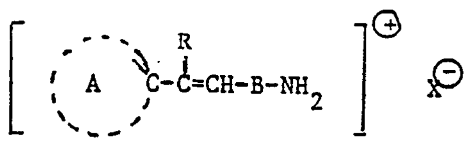

in which the general symbols are as defined in claim 1, and coupling onto a coupling component HKK where KK is as defined in claim 1.

23. A process for preparing the methine-azo compound defined in claim 1, which comprises condensing an azo compound of the formula

$$O = \overset{H}{\overset{|}{C}} - B - N = N - KK$$

with a compound of the formula

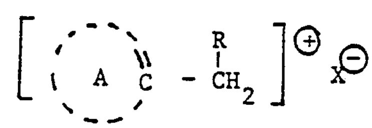

the general symbols being as defined in claim 1.

**Revendications** (pour les Etats contractants : DE, GB, FR, CH, LI, IT, BE, SE)

1. Composés méthine-azoïques de formule :

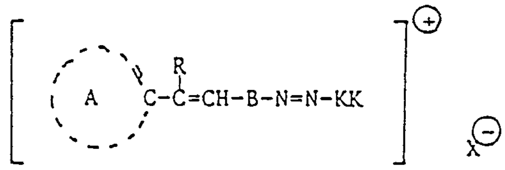

dans laquelle :

A représente la partie complémentaire d'un cycle hétérocyclique à 5 ou 6 chaînons possédant un atome d'azote quaternisé en tant qu'atome du cycle, ledit cycle hétérocyclique pouvant contenir d'autres hétéroatomes et étant éventuellement substitué et/ou condensé avec des noyaux carbocycliques ou hétérocycliques,

R représente un atome d'hydrogène, un groupe cyano ou un groupe alkylène $C_2$-$C_3$, qui est relié à un atome d'azote du cycle A pour former un noyau à 5 ou 6 chaînons, B représente un groupe phénylène ou naphtylène éventuellement substitué,

$X^{\ominus}$ représente un anion et

KK représente le reste d'un dérivé de l'acide acétoacétique, de l'acide malonique ou de l'acide cyanoacétique, avec la restriction que, lorsque A représente la partie complémentaire d'un cycle pyridinium, KK ne peut pas être le reste de l'acétocétanilide non substitué ou substitué par alkyle sur le cycle de l'aniline.

2. Composés méthine-azoïques selon la revendication 1, pour lesquels A, R, B et $X^{\ominus}$ sont définis comme indiqué à la revendication 1 et KK représente le reste d'un dérivé de l'acide acétoacétique, de l'acide malonique ou de l'acide cyanoacétique, à l'exception du reste de l'acétoacétanilide non substitué ou substitué par alkyle dans le cycle de l'aniline.

3. Composés méthine-azoïques selon la revendication 1 ou 2, pour lesquels R représente un atome d'hydrogène.

4. Composés méthine-azoïques selon l'une des revendications 1 à 3, pour lesquels B représente phénylène, de préférence 1,4-phénylène.

5. Composés méthine-azoïques selon l'une des revendications 1 à 4, pour lesquels A représente la partie complémentaire d'un cycle pyridine, pyrrole, pyrimidine, quinoléine, thazole, imidazole ou oxazole quaternisé, éventuellement substitué et/ou condensé avec des cycles carbocycliques.

6. Composés méthine-azoïques selon la revendication 5, pour lesquels A représente la partie complémentaire d'un cycle pyridine quaternisé, éventuellement substitué et/ou condensé avec des cycles carbocycliques.

7. Composés méthine-azoïques selon la revendication 5, pour lesquels A représente la partie complémentaire de l'un des cycles suivants :

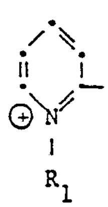 , 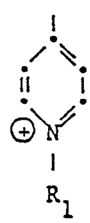 , 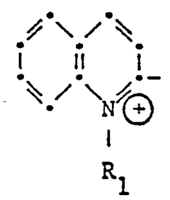 , 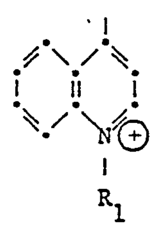 , 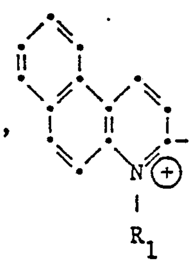

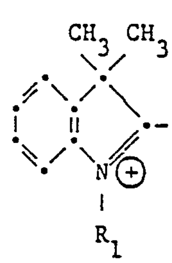 , 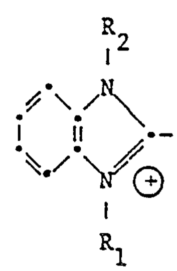 , 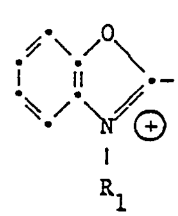 , 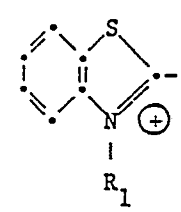

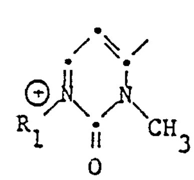 , 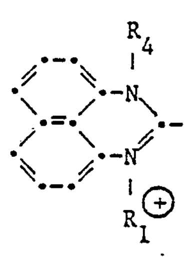 , 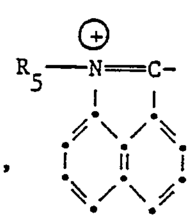 ou 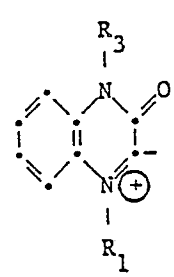

ces cycles pouvant être substitués, outre par les substituants $R_1$ à $R_5$, par encore nitro, halogène, cyano, alkyle $C_1$-$C_4$, alcoxy $C_1$-$C_4$, acétylamino ou diméthylamino, $R_1$, $R_2$, $R_3$ et $R_4$ représentant, indépendamment l'un de l'autre, alkyle $C_1$-$C_8$, alcényle $C_2$-$C_8$ ou cycloalkyle $C_3$-$C_6$, les chaînes alkyle, alcényle ou cycloalkyle pouvant être interrompues par des atomes d'oxygène ou d'azote et/ou substituées par halogène, cyano, hydroxy, alcoxy, phényle, phénoxy, dialkylamino, trialkylammonium, acétylamino, alkylcarbonyle, alcoxycarbonyle, alkylsulfonyle, phénylsulfonyle, benzylsulfonyle, alkylsulfonamido, phénylsulfonamido, benzylsulfonamido, alkylcarbonylamino, benzoyle, benzoylamino, alkylcarbamoyle, phénylcarbamoyle, benzylcarbamoyle, alkylcarbamoyloxy, phénylcarbamoyloxy ou benzylcarbamoyloxy, et $R_5$ représentant phényle ou ayant la signification de $R_1$.

8. Composés méthine-azoïques selon la revendication 7, pour lesquels A représente la partie complémentaire de l'un des cycles suivants :

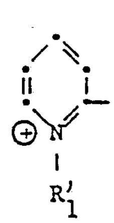 , 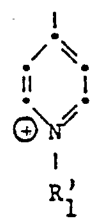 , 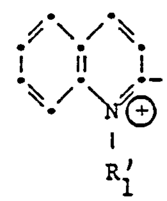 , 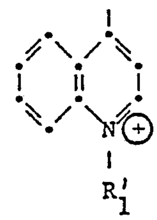 , 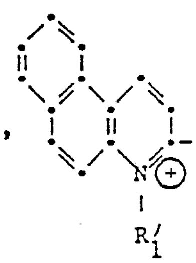

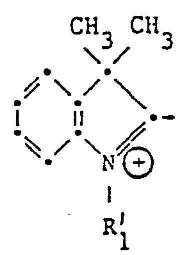 , 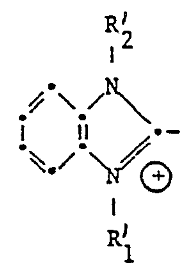 ou 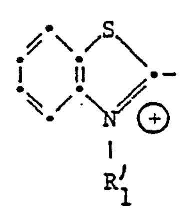

dans lesquels $R'_1$ et $R'_2$ représentent, indépendamment l'un de l'autre, alkyle $C_1$-$C_4$, benzyle, cyclohexyle, hydroxyalkyle ou alcényle $C_3$-$C_4$, les cycles indiqués ne portant pas d'autres substituants ou étant en plus substitués par halogène, cyano, alkyle $C_1$-$C_4$, hydroxyalkyle $C_1$-$C_4$ ou alcoxy $C_1$-$C_4$.

9. Composés méthine-azoïques selon la revendication 8, pour lesquels A représente la partie complémentaire d'un cycle pyridinium ou d'un cycle 3,3-diméthyl-indoléninium, dans lequel $R_1'$ représente méthyle.

10. Composés méthine-azoïques selon l'une des revendications 1 à 9, pour lesquels KK représente le reste d'un dérivé de l'acide acétoacétique.

11. Composés méthine-azoïques selon la revendication 10, pour lesquels KK représente le reste d'un copulant ester ou amide de l'acide acétoacétique.

12. Composés méthine-azoïques selon la revendication 10, pour lesquels KK représente le reste d'un copulant de formule :

$$Z{-}CH_2{-}CO{-}CH_2{-}CO{-}R_6,\ R_6{-}CO{-}CH_2{-}CO{-}R_6 \text{ ou } NC{-}CH_2{-}CO{-}R_6$$

dans lesquelles Z représente un atome d'hydrogène ou d'halogène ou un groupe amino ou ammonium aliphatique, cycloaliphatique ou aromatique éventuellement substitué, et $R_6$ représente un groupe alcoxy, cycloalcoxy, benzyloxy ou phénoxy éventuellement substitué, un groupe amino non substitué, mono-substitué ou di-substitué, ou un groupe amino saturé ou insaturé cyclique à 5 ou 6 chaînons.

13. Composés méthine-azoïques selon la revendication 12, pour lesquels KK représente le reste d'un copulant de formule $Z{-}CH_2{-}CO{-}CH_2{-}CO{-}R_6$.

14. Composés méthine-azoïques selon la revendication 12 ou 13, pour lesquels $R_6$ représente un groupe alcoxy avec 1 à 8 atomes de carbone, cycloalcoxy, benzyloxy ou phénoxy, les groupes indiqués étant non substitués ou substitués par alkyle $C_1$-$C_4$, alcoxy $C_1$-$C_4$, halogène, acylamino, carbonamido, sulfonamido, dialkylamino, alkyl($C_1$-$C_4$)carbonyle, alcoxy($C_1$-$C_4$)carbonyle, hydroxy ou phényle, ou bien $R_6$ représente un reste de formule $-NR_7R_8$, dans laquelle $R_7$ représente alkyle $C_1$-$C_4$ ou un atome d'hydrogène et $R_8$ représente un atome d'hydrogène, alkyle $C_1$-$C_8$ éventuellement substitué, cycloalkyle, benzyle éventuellement substitué ou un reste phényle de formule :

(Voir formule page 52)

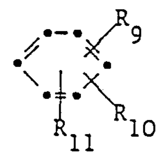

dans laquelle :

$R_9$ représente hydrogène, alkyle $C_1$-$C_4$, alcoxy $C_1$-$C_4$, halogène, cyano, nitro, dialkylamino, phénylamino,

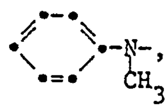

phényle, acylamino, carbonamido, sulfonamido, alkyl-($C_1$-$C_4$)carbonyle, alcoxy($C_1$-$C_4$)carbonyle, alkyl($C_1$-$C_4$)-sulfonyle, un reste de formule $-(CH_2)_w-K^{\oplus}An^{\ominus}$, dans laquelle $K^{\oplus}$ représente un groupe ammonium aliphatique ou aromatique, $An^{\ominus}$ représente un anion et w représente 1 ou

2, ou un reste de formule

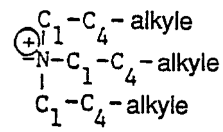

$R_{10}$ représente hydrogène, alkyle $C_1$-$C_4$, alcoxy $C_1$-$C_4$ ou halogène et

$R_{11}$ représente hydrogène, halogène ou alkyle $C_1$-$C_4$, ou bien

$R_8$ forme avec $R_7$, éventuellement moyennant l'inclusion d'autres hétéroatomes, un cycle saturé ou insaturé à 5 ou 6 chaînons, ou bien

$R_6$ représente un groupe amino substitué par un noyau hétérocyclique éventuellement substitué ou un groupe de formule :

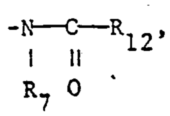 , 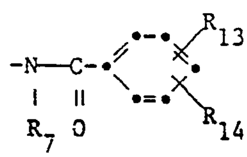 , 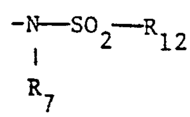 ou 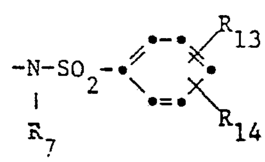

dans lesquelles

$R_7$ a la signification indiquée précédemment,

$R_{12}$ représente alkyle $C_1$-$C_8$ éventuellement substitué, cycloalkyle, amino, alkylamino, dialkylamino, phénylamino, alcoxy ou phénoxy et

$R_{13}$ et $R_{14}$ représentent, indépendamment l'une de l'autre, hydrogène, alkyle $C_1$-$C_4$, alcoxy $C_1$-$C_4$, halogène ou dialkylamino.

15. Composés méthine-azoïques selon l'une des revendications 12 à 14, pour lesquels Z représente un atome d'hydrogène.

16. Composés méthine-azoïques selon la revendication 14 ou 15, pour lesquels $R_6$ représente $-NR_7R_8$ ou $NH-R_{14}$, où $R_{14}$ représente un reste hétérocyclique mono ou bicyclique éventuellement substitué, qui contient des cycles carbocycliques ou hétérocycliques à 5 ou 6 chaînons avec 1 ou 2 atomes d'azote, d'oxygène et/ou de soufre comme atome du cycle.

17. Composés méthine-azoïques selon la revendication 1, pour lesquels R représente un atome d'hydrogène, B représente phénylène, A représente la partie complémentaire d'un cycle de formule :

(Voir formule page 53)

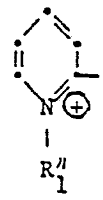 , 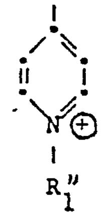 , 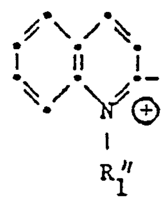 , 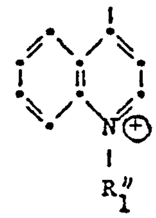

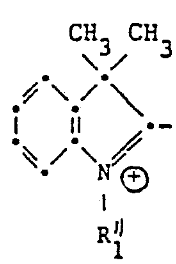 , 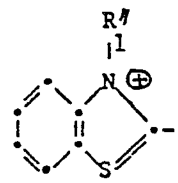 ou 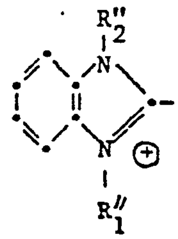

dans lesquelles $R_1''$ et $R_2''$ représentent chacun alkyle $C_1$-$C_4$, de préférence méthyle, benzyle ou hydroxyalkyle $C_1$-$C_4$, et KK représente un reste de formule :

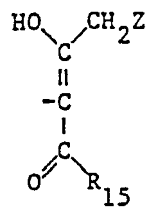

dans laquelle Z représente hydrogène, halogène ou

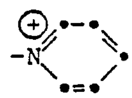

de préférence hydrogène, et $R_{15}$ représente —$OR_{16}$, où $R_{16}$ représente alkyle $C_1$-$C_4$ ou phényle, ou —NH—$R_{17}$ ou —$NR_{18}R_{19}$, où $R_{18}$ représente alkyle $C_1$-$C_4$, $R_{19}$ représente alkyle $C_1$-$C_4$ ou phényle ou bien $R_{18}$ et $R_{19}$ représentent ensemble la partie complémentaire d'un cycle morpholine, pipéridine, pipérazine, pyrrolidine ou

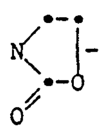

et $R_{17}$ représente hydrogène, alkyle $C_1$-$C_4$, alkyle $C_1$-$C_4$ substitué par phényle, cyclohexyle, alkyle $C_1$-$C_4$ substitué par cyclohexyle, benzoyle, naphthyle ou un groupe de formule :

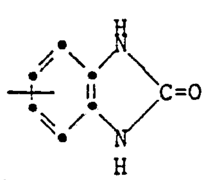 , 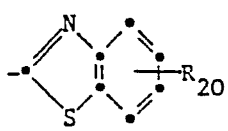 ou 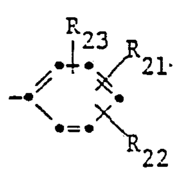

dans lesquelles $R_{20}$ représente hydrogène, halogène, alkyle $C_1$-$C_4$, alcoxy $C_1$-$C_4$, $R_{21}$ représente hydrogène, halogène, alkyle $C_1$-$C_4$, alcoxy $C_1$-$C_4$, —NHCO-alkyl($C_1$-$C_4$) ou —$SO_2NH_2$, $R_{22}$ représente hydrogène, halogène, alkyle $C_1$-$C_4$ ou alcoxy $C_1$-$C_4$ et $R_{23}$ représente hydrogène ou halogène.

18. Composés méthine-azoïques selon la revendication 17, pour lesquels au moins l'un des restes $R_{21}$, $R_{22}$ et $R_{23}$ est différent de hydrogène et de alkyle $C_1$-$C_4$.

19. Composés méthine-azoïques selon la revendication 17, pour lesquels A représente la partie complémentaire d'un cycle de formule :

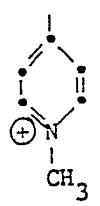

ou

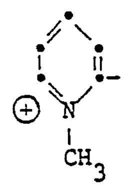

B représente 1,4-phénylène, Z représente un atome d'hydrogène et $R_{15}$ représente —NH—$R_{17}'$, dans laquelle $R_{17}'$ représente benzoyle, naphthyle,

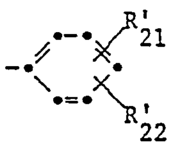

,

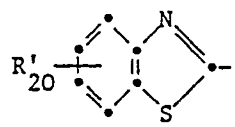

ou

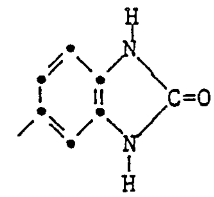

où $R'_{21}$ représente alcoxy $C_1$-$C_4$ ou NHCO-alkyl($C_1$-$C_4$) et $R_{22}'$ représente hydrogène, alkyle $C_1$-$C_4$ ou alcoxy $C_1$-$C_4$ et $R'_{20}$ représente hydrogène ou alcoxy $C_1$-$C_4$.

20. Procédé de préparation des composés méthine-azoïques définis dans la revendication 1, caractérisé en ce qu'on diazote des composés méthiniques de formule :

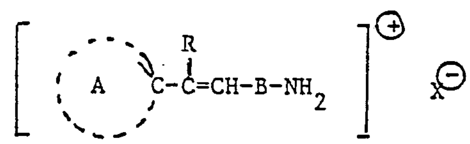

dans laquelle les différents symboles sont définis comme indiqué à la revendication 1, et effectue la copulation avec un copulant HKK, où KK est défini comme indiqué à la revendication 1.

21. Procédé de préparation des composés méthine-azoïques définis dans la revendication 1, caractérisé en ce que l'on condense un composé azoïque de formule :

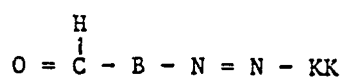

avec un composé de formule :

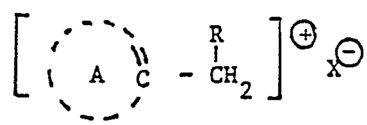

les différents symboles étant définis comme indiqué à la revendication 1.

22. Utilisation des composés méthine-azoïques définis dans la revendication 1 en tant que colorants pour la teinture ou l'impression de substrats susceptibles d'être teints avec des colorants cationiques.

23. Utilisation selon la revendication 22 pour la teinture ou l'impression de matériau polyacrylonitrile, de matériau polyamide ou polyester modifié de manière acide ou du coton.

24. Utilisation selon la revendication 22 pour la teinture ou l'impression du papier et du carton.

25. Matériau teint ou imprimé selon l'une des revendications 22 à 24.

**Revendications** (pour l'Etat contractant AT)

1. Utilisation, en tant que colorants pour la teinture ou l'impression de substrats susceptibles d'être teints avec des colorants cationiques, des composés méthine-azoïques de formule :

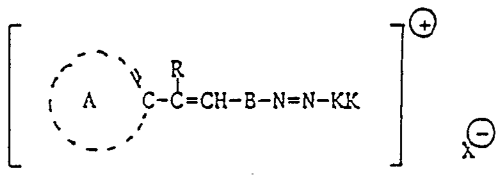

dans laquelle :

A représente la partie complémentaire d'un cycle hétérocyclique à 5 ou 6 chaînons possédant un atome d'azote quaternisé en tant qu'atome du cycle, ledit cycle hétérocyclique pouvant contenir d'autres hétéroatomes et étant éventuellement substitué et/ou condensé avec des noyaux carbocycliques ou hétérocycliques,

R représente un atome d'hydrogène, un groupe cyano ou un groupe alkylène $C_2$-$C_3$, qui est relié à un atome d'azote du cycle A pour former un noyau à 5 ou 6 chaînons, B représente un groupe phénylène ou naphtylène éventuellement substitué,

$X^{\ominus}$ représente un anion et

KK représente le reste d'un dérivé de l'acide acétoacétique, de l'acide malonique ou de l'acide cyanoacétique, avec la restriction que, lorsque A représente la partie complémentaire d'un cycle pyridinium, KK ne peut pas être le reste de l'acétoacétanilide non substitué ou substitué par alkyle sur le cycle de l'aniline.

2. Utilisation selon la revendication 1 des composés méthine-azoïques pour lesquels A, R, B et $X^{\ominus}$ sont définis comme à la revendication 1 et KK représente le reste d'un dérivé de l'acide acétoacétique, de l'acide malonique ou de l'acide cyanoacétique, à l'exception du reste de l'acétoacétanilide non substitué ou substitué par alkyle dans le cycle de l'aniline.

3. Utilisation selon la revendication 1 ou 2 des composés méthine-azoïques pour lesquels R représente un atome d'hydrogène.

4. Utilisation selon l'une des revendications 1 à 3 des composés méthine-azoïques pour lesquels B représente phénylène, de préférence 1,4-phénylène.

5. Utilisation selon l'une des revendications 1 à 4 des composés méthine-azoïques pour lesquels A représente la partie complémentaire d'un cycle pyridine, pyrrole, pyrimidine, quinoléine, thiazole, imidazole ou oxazole quaternisé, éventuellement substitué et/ou condensé avec des noyaux carbocycliques.

6. Utilisation selon la revendication 5 des composés méthine-azoïques pour lesquels A représente la partie complémentaire d'un cycle pyridine quaternisé, éventuellement substitué et/ou condensé avec des noyaux carbocycliques.

7. Utilisation selon la revendication 5 des composés méthine-azoïques pour lesquels A représente la partie complémentaire de l'un des cycles suivants :

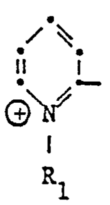 , 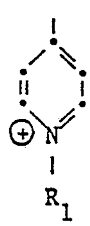 , 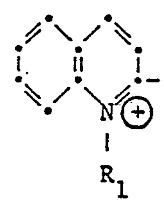 , 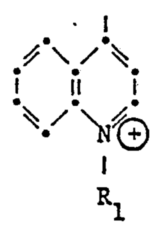 , 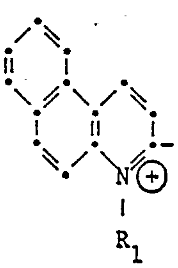

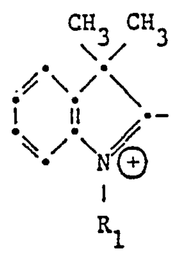 , 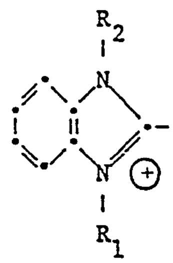 , 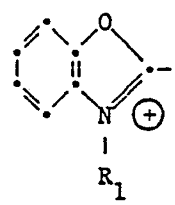 , 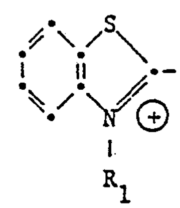

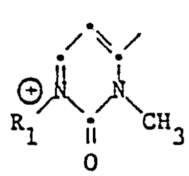 , 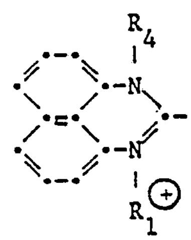 , 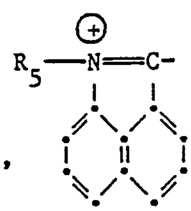 ou 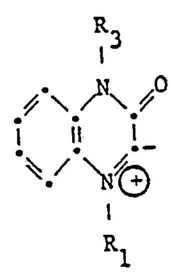

ces cycles pouvant être substitués, outre par les substituants $R_1$ à $R_5$, par encore nitro, halogène, cyano, alkyle $C_1$-$C_4$, alcoxy $C_1$-$C_4$, acétylamino ou diméthylamino, $R_1$, $R_2$, $R_3$ et $R_4$ représentant, indépendamment l'un de l'autre, alkyle $C_1$-$C_8$, alcényle $C_2$-$C_8$ ou cycloalkyle $C_3$-$C_6$, les chaînes alkyle, alcényle ou cycloalkyle pouvant être interrompues par des atomes d'oxygène ou d'azote et/ou substituées par halogène, cyano, hydroxy, alcoxy, phényle, phénoxy, dialkylamino, trialkylammonium, acétylamino, alkylcarbonyle, alcoxycarbonyle, alkylsulfonyle, phényl-sulfonyle, benzylsulfonyle, alkylsulfonamido,

phényl-sulfonamido, benzylsulfonamido, alkylcarbonylamino, benzoyle, benzoylamino, alkylcarbamoyle, phénylcarbamoyle, benzylcarbamoyle, alkylcarbamoyloxy, phénylcarbamoyloxy ou benzylcarbamoyloxy, et $R_5$ représentant phényle ou ayant la signification de $R_1$.

8. Utilisation selon la revendication 7 des composés méthine-azoïques pour lesquels A représente la partie complémentaire de l'un des cycles suivants :

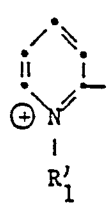 , 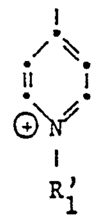 , 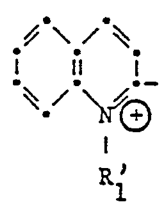 , 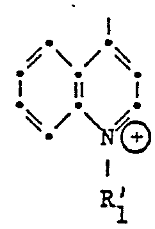 , 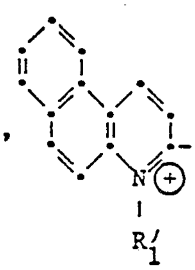

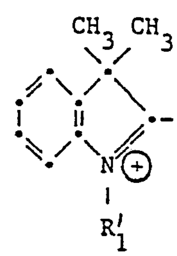 , 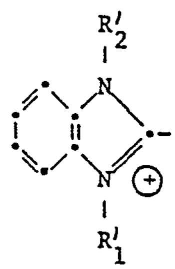 ou 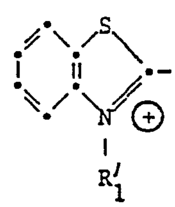 :

dans lesquels $R_1'$ et $R_2'$ représentent, indépendamment l'un de l'autre, alkyle $C_1$-$C_4$, benzyle, cyclohexyle, hydroxyalkyle ou alcényle $C_3$-$C_4$, les cycles indiqués ne portant pas d'autres substituants ou étant en plus substitués par halogène, cyano, alkyle $C_1$-$C_4$, hydroxy-alkyle $C_1$-$C_4$ ou alcoxy $C_1$-$C_4$.

9. Utilisation selon la revendication 8 des composés méthine-azoïques pour lesquels A représente la partie complémentaire d'un cycle pyridinium ou 3,3-diméthylindoléninium, dans lequel $R_1$ représente méthyle.

10. Utilisation selon l'une des revendications 1 à 9 des composés méthine-azoïques pour lesquels KK représente le reste d'un dérivé de l'acide acétoacétique.

11. Utilisation selon la revendication 10 des composés méthine-azoïques pour lesquels KK représente le reste d'un copulant amide ou ester de l'acide acétoacétique.

12. Utilisation selon la revendication 10 des composés méthine-azoïques pour lesquels KK représente le reste d'un copulant de formule :

$$Z—CH_2—CO—CH_2—CO—R_6,\ R_6—CO—CH_2—CO—R_6 \text{ ou } NC—CH_2—CO—R_6$$

dans lesquelles Z représente un atome d'hydrogène ou d'halogène ou un groupe amino ou ammonium aliphatique, cycloaliphatique ou aromatique, éventuellement substitué, et $R_6$ représente un groupe alcoxy, cycloalcoxy, benzyloxy ou phénoxy éventuellement substitué, un groupe amino non substitué, mono-substitué ou di-substitué, ou un groupe amino cyclique saturé ou insaturé à 5 ou 6 chaînons.

13. Utilisation selon la revendication 12 des composés méthine-azoïques pour lesquels KK représente le reste d'un copulant de formule $Z—CH_2—CO—CH_2—CO—R_6$.

14. Utilisation selon la revendication 12 ou 13 des composés méthine-azoïques pour lesquels $R_6$ représente alcoxy avec 1 à 8 atomes de carbone, cycloalcoxy, benzyloxy ou phénoxy, les groupes indiqués étant non substitués ou substitués par alkyle $C_1$-$C_4$, alcoxy $C_1$-$C_4$, halogène, acylamino, carbonamido, sulfonamido, dialkylamino, alkyl($C_1$-$C_4$)carbonyle, alcoxy($C_1$-$C_4$)carbonyle, hydroxy ou phényle, ou bien

$R_6$ représente un reste de formule $—NR_7R_8$, dans laquelle $R_7$ représente alkyle $C_1$-$C_4$ ou hydrogène et $R_8$ représente hydrogène, alkyle $C_1$-$C_8$ éventuellement substitué, cycloalkyle, benzyle éventuellement substitué ou un reste phényle de formule :

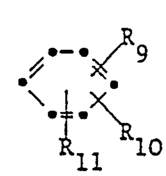

dans laquelle :

$R_9$ représente hydrogène, alkyle $C_1$-$C_4$, alcoxy $C_1$-$C_4$, halogène, cyano, nitro, dialkylamino, phénylamino,

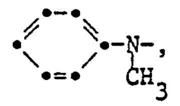

phényle, acylamino, carbonamido, sulfonamido, alkyle($C_1$-$C_4$)carbonyle, alcoxy($C_1$-$C_4$)carbonyle, alkyle($C_1$-$C_4$)sulfonyle, un reste de formule $-(CH_2)_w-K^{\oplus}$ $An^{\ominus}$, dans laquelle $K^{\oplus}$ représente un groupe ammonium aliphatique ou aromatique, $An^{\ominus}$ représente un anion et w représente 1 ou 2, ou un reste de formule

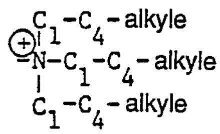

$R_{10}$ représente hydrogène, alkyle $C_1$-$C_4$, alcoxy $C_1$-$C_4$ ou halogène et

$R_{11}$ représente hydrogène, halogène ou alkyle $C_1$-$C_4$, ou bien

$R_8$ forme avec $R_7$, éventuellement moyennant l'inclusion d'autres hétéroatomes, un noyau saturé ou insaturé à 5 ou 6 chaînons, ou bien

$R_6$ représente un groupe amino substitué par un noyau hétérocyclique éventuellement substitué ou un groupe de formule :

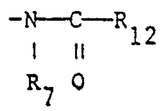 , 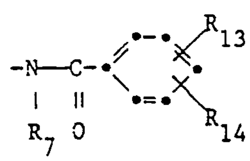 , 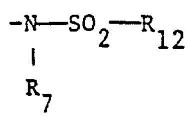 ou 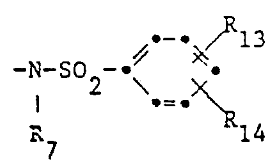

dans lesquelles :

$R_7$ a la signification indiquée précédemment,

$R_{12}$ représente alkyle $C_1$-$C_8$, éventuellement substitué, cycloalkyle, amino, alkylamino, dialkylamino, phénylamino, alcoxy ou phénoxy, et

$R_{13}$ et $R_{14}$ représentent, indépendamment l'un de l'autre, hydrogène, alkyle $C_1$-$C_4$, alcoxy $C_1$-$C_4$, halogène ou dialkylamino.

15. Utilisation selon l'une des revendications 12 à 14 des composés méthine-azoïques pour lesquels Z représente un atome d'hydrogène.

16. Utilisation selon la revendication 14 ou 15 des composés méthine-azoïques pour lesquels $R_6$ représente $-NR_7R_8$ ou $NH-R_{14}$, $R_{14}$ représentant un reste hétérocyclique monocyclique ou bicyclique éventuellement substitué, qui contient des cycles carbocycliques ou hétérocycliques à 5 ou 6 chaînons avec 1 ou 2 atomes d'azote, d'oxygène et/ou de soufre comme atomes du cycle.

17. Utilisation selon la revendication 1 des composés méthine-azoïques pour lesquels R représente un atome d'hydrpgène, B représente phénylène, A représente la partie complémentaire d'un cycle de formule :

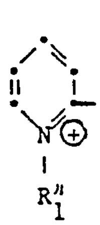 , 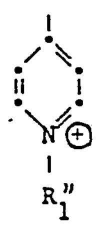 , 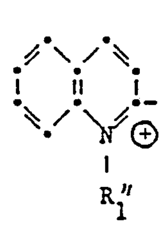 , 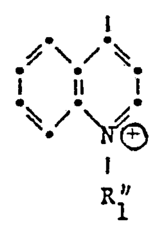 ,

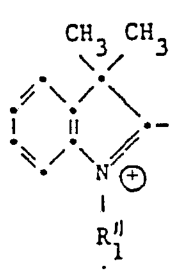 , 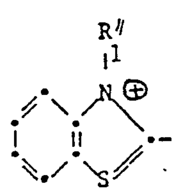 ou 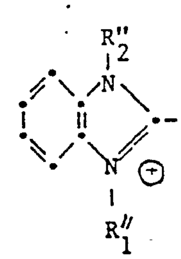

dans lesquelles $R_1''$ et $R_2''$ représentent chacun alkyle $C_1$-$C_4$, de préférence méthyle, benzyle ou hydroxyalkyle $C_1$-$C_4$ et KK représente un reste de formule :

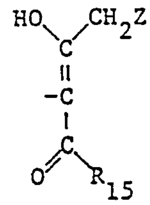

dans laquelle Z représente hydrogène, halogène ou

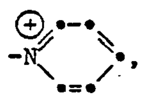

de préférence hydrogène, et $R_{15}$ représente —$OR_{16}$, où $R_{16}$ représente alkyle $C_1$-$C_4$ ou phényle, ou —NH—$R_{17}$ ou —$NR_{18}R_{19}$ où $R_{18}$ représente alkyle $C_1$-$C_4$, $R_{19}$ représente alkyle $C_1$-$C_4$ ou phényle ou bien $R_{18}$ et $R_{19}$ forment ensemble la partie complémentaire d'un cycle morpholine, pipéridine, pipérazine, pyrrolidine ou

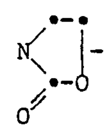

et $R_{17}$ représente hydrogène, alkyle $C_1$-$C_4$, alkyle($C_1$-$C_4$) substitué par phényle, cyclohexyle, alkyle($C_1$-$C_4$) substitué par cyclohexyle, benzoyle, naphtyle ou un groupe de formule :

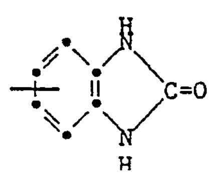 , 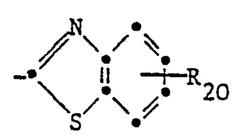 ou 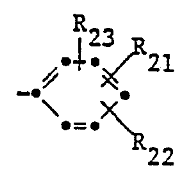 .

dans lesquelles $R_{20}$ représente hydrogène, halogène, alkyle $C_1$-$C_4$ ou alcoxy $C_1$-$C_4$, $R_{21}$ représente hydrogène, halogène, alkyle $C_1$-$C_4$, alxocy $C_1$-$C_4$, —NHCO-alkyl($C_1$-$C_4$) ou —$SO_2NH_2$, $R_{22}$ représente hydrogène, halogène, alkyle $C_1$-$C_4$ ou alcoxy $C_1$-$C_4$ et $R_{23}$ représente hydrogène ou halogène.

18. Utilisation selon la revendication 17 des composés méthine-azoïques pour lesquels au moins l'un des restes $R_{21}$, $R_{22}$ et $R_{23}$ est différent d'hydrogène et de alkyle $C_1$-$C_4$.

19. Utilisation selon la revendication 17 des composés méthine-azoïques pour lesquels A représente la partie complémentaire d'un cycle de formule :

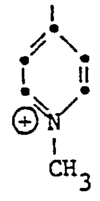 ou 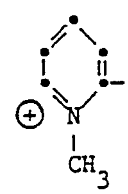

B représente 1,4-phénylène, Z représente un atome d'hydrogène et $R_{15}$ représente —NH—$R'_{17}$, où $R'_{17}$ représente benzoyle, naphthyle,

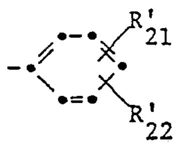 , 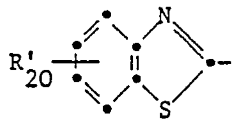 ou 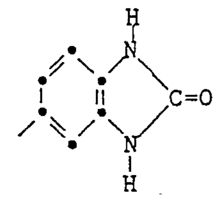

où $R'_{21}$ représente alcoxy $C_1$-$C_4$ ou NHCO-alkyl($C_1$-$C_4$) et $R'_{22}$ représente hydrogène, alkyle $C_1$-$C_4$ ou alcoxy $C_1$-$C_4$ et $R'_{20}$ représente hydrogène ou alcoxy $C_1$-$C_4$.

20. Utilisation selon l'une des revendications 1 à 19 pour la teinture ou l'impression de matériaux polyacrylonitrile, de matériaux polyamide ou polyester modifiés de manière acide ou du coton.

21. Utilisation selon l'une des revendications 1 à 19 pour la teinture ou l'impression du papier ou du carton.

22. Procédé pour la préparation des composés méthine-azoïques définis dans la revendication 1, caractérisé en ce que l'on effectue la diazotation des composés méthiniques de formule :

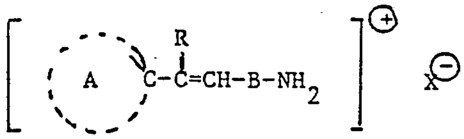

dans laquelle les différents symboles sont définis comme indiqué à la revendication 1, et effectue la copulation avec un copulant HKK, KK étant défini comme indiqué à la revendication 1.

23. Procédé pour la préparation des composés méthine-azoïques définis à la revendication 1, caractérisé en ce qu'on condense un composé azoïque de formule :

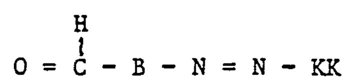

avec un composé de formule :

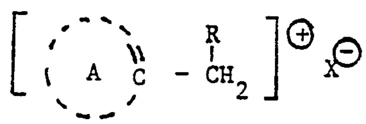

les différents symboles étant définis comme indiqué à la revendication 1.